(19) **Europäisches Patentamt / European Patent Office / Office européen des brevets**

(11) **EP 4 583 595 A1**

(12) **EUROPEAN PATENT APPLICATION**
published in accordance with Art. 153(4) EPC

(43) Date of publication:
09.07.2025 Bulletin 2025/28

(21) Application number: 23860949.9

(22) Date of filing: 01.09.2023

(51) International Patent Classification (IPC):
$H04W\ 56/00^{(2009.01)}$    $H04L\ 5/00^{(2006.01)}$
$H04L\ 7/00^{(2006.01)}$

(52) Cooperative Patent Classification (CPC):
H04L 5/00; H04L 7/00; H04W 56/00

(86) International application number:
PCT/KR2023/013100

(87) International publication number:
WO 2024/049274 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.09.2022 KR 20220111267
30.08.2023 KR 20230114406

(71) Applicant: Electronics and Telecommunications
Research Institute
Daejeon 34129 (KR)

(72) Inventors:
• CHANG, Kapseok
  Daejeon 34129 (KR)
• KIM, Yong Sun
  Daejeon 34129 (KR)
• KO, Young-Jo
  Daejeon 34129 (KR)

(74) Representative: Betten & Resch
Patent- und Rechtsanwälte PartGmbB
Maximiliansplatz 14
80333 München (DE)

(54) **METHOD AND DEVICE FOR AVOIDING TRANSMISSION TIMING ERRORS**

(57) A method and device for avoiding transmission timing errors are disclosed. A RUE method comprising the steps of: receiving a first error measurement request message from a first base station; receiving a second error measurement request message from a second base station; receiving a first reference signal from the first base station on the basis of the first error measurement request message; determining a first transmission timing of the first base station on the basis of the first reference signal; receiving a second reference signal from the second base station on the basis of the second error measurement request message; and determining a second transmission timing of the second base station on the basis of the second reference signal.

FIG. 4

**Description**

[Technical Field]

The present disclosure relates to a technique for absolute time synchronization (ATS), and more specifically, to a technique for avoiding a transmission timing error affecting a timing accuracy.

[Background Art]

A wireless factory automation system may have many advantages over a wired factory automation system. For example, the wireless factory automation system may have advantages such as enhanced flexibility, improved safety, greater scalability, and ease of shifting between facilities.

In order to support a conveyor belt manufacturing function by sophisticated motion control of the wired factory automation system in the wireless factory automation system, absolute time synchronization (ATS) techniques may be required so that wireless devices (e.g., mobile robots, sensors, and activators) can perform isochronous/sequential cooperative operations at fixed timings. The term ATS may denote synchronization that ensures wireless devices receive precisely the same timing or clock, regardless of their locations.

To achieve ATS in the wireless factory automation system, addressing timing errors becomes crucial. These errors encompass transmission timing errors as well as reception timing errors. While reception timing errors can be partially mitigated, the variability of transmission timing errors due to inherent hardware impairments among communication nodes makes their elimination unfeasible. Consequently, methods are needed to mitigate the impact of transmission timing errors that occur between communication nodes, such as user equipment (UEs).

[Disclosure]

[Technical Problem]

The present disclosure are directed to providing a method and an apparatus for achieving ATS in a wireless communication-based factory automation system.

[Technical Solution]

According to a first exemplary embodiment of the present disclosure, a method of a reference user equipment (RUE) may comprise: receiving a first error measurement request message from a first base station; receiving a second error measurement request message from a second base station; receiving a first reference signal from the first base station based on the first error measurement request message; determining a first transmission timing of the first base station based on the first reference signal; receiving a second reference signal from the second base station based on the second error measurement request message; determining a second transmission timing of the second base station based on the second reference signal; calculating a difference between the first transmission timing and the second transmission timing; transmitting a first error measurement response message including information on the difference to the first base station; and transmitting a second error measurement response message including information on the difference to the second base station.

The first error measurement request message may include information on transmission resources for the first reference signal, the second error measurement request message may include information on transmission resources for the second reference signal, and each of the first reference signal and the second reference signal may be one of a demodulation reference signal (DMRS), a channel state information-reference signal (CSI-RS), a positioning reference signal (PRS), or a phase tracking-reference signal (PT-RS).

Each of the first error measurement request message and the second error measurement request message may include a type field and a counterpart base station (BS) field, the type field may indicate that a type of an error measurement message is an error measurement request, the counterpart BS field included in the first error measurement request message may be set to an identifier (ID) of the second base station, which is a counterpart BS for which error measurement is desired, and the counterpart BS field included in the second error measurement request message may be set to an ID of the first base station, which is a counterpart BS for which error measurement is desired.

Each of the first error measurement response message and the second error measurement response message may include a type field, a counterpart BS field, a timing difference field, and a compensation BS field, the type field may indicate that a type of an error measurement message is an error measurement response, the counterpart BS field included in the first error measurement response message may be set to an ID of the second base station, which is a counterpart BS for which error measurement is desired, the counterpart BS field included in the second error measurement response message may be set to an ID of the first base station, which is a counterpart BS for which error measurement is desired, the timing difference field may be set to the difference between the first transmission timing and the second transmission timing, and the compensation BS field may indicate a BS that compensates for the difference between the transmission timings.

The first transmission timing may be determined by further considering a first propagation delay for the first base station and the RUE, and the second transmission timing may be determined by further considering a second propagation delay for the second base station and the RUE.

The RUE may be a common RUE between one or more RUEs registered with the first base station and one or more RUEs registered with the second base station.

According to a second exemplary embodiment of the present disclosure, a method of a first base station may comprise: transmitting a first error measurement request message to a reference user equipment (RUE); transmitting a first reference signal to the RUE based on the first error measurement request message; transmitting an error measurement demand message to a second base station; receiving, from the RUE, a first error measurement response message including information on a difference between a first transmission timing of the first base station and a second transmission timing of the second base station; and compensating for the difference to perform downlink communication.

The method may further comprise: requesting transmission of a base station (BS) registration list to one or more RUEs; receiving one or more BS registration lists from the one or more RUEs; and identifying a common RUE registered in common with the first base station and the second base station based on the one or more BS registration lists.

The method may further comprise: requesting transmission of an RUE registration list to one or more base stations; receiving one or more RUE registration lists from the one or more base stations; and identifying the second base station to which the RUE is registered among the one or more base stations based on the one or more RUE registration lists, wherein the RUE is a common RUE registered in common with the first base station and the second base station, and the error measurement request message is transmitted to the second base station having the common RUE.

The method may further comprise: transmitting information on the difference between the first transmission timing of the first base station and the second transmission timing of the second base station to the second base station.

The first error measurement request message may include a type field and a counterpart BS field, the type field may indicate that a type of an error measurement message is an error measurement request, and the counterpart BS field included in the first error measurement request message may be set to an identifier (ID) of the second base station, which is a counterpart BS for which error measurement is desired.

The error measurement demand message may request the second base station to transmit a second error measurement request message or a second reference signal to the RUE.

The first error measurement response message may include a type field, a counterpart BS field, a timing difference field, and a compensation BS field, the type field may indicate that a type of an error measurement message is an error measurement response, and the counterpart BS field included in the first error measurement response message may be set to an ID of the second base station, which is a counterpart BS for which error measurement is desired, the timing difference field may be set to the difference between the first transmission timing and the second transmission timing, and the compensation BS field may indicate a BS that compensates for the difference between the transmission timings.

The first transmission timing may be determined by further considering a first propagation delay for the first base station and the RUE, and the second transmission timing may be determined by further considering a second propagation delay for the second base station and the RUE.

According to a third exemplary embodiment of the present disclosure, a method of a first base station may comprise: transmitting an error measurement demand message requesting transmission of a second reference signal to a second base station; transmitting an error measurement request message to a reference user equipment (RUE); transmitting a first reference signal to the RUE based on the error measurement request message; receiving, from the RUE, an error measurement response message including information on a difference between a first transmission timing of the first base station and a second transmission timing of the second base station; and compensating for the difference to perform downlink communication.

The error measurement demand message may request simultaneous transmission or sequential transmission of the first reference signal and the second reference signal, the error measurement demand message may include transmission resource information of the second reference signal, and the second reference signal of the second base station may be transmitted to the RUE in transmission resources indicated by the transmission resource information.

The error measurement request message may include transmission resource information of the first reference signal and transmission resource information of the second reference signal.

The first transmission timing may be determined by further considering a first propagation delay for the first base station and the RUE, and the second transmission timing may be determined by further considering a second propagation delay for the second base station and the RUE.

The method may further comprise: requesting transmission of a base station (BS) registration list to one or more RUEs; receiving one or more BS registration lists from the one or more RUEs; and identifying a common RUE registered in common with the first base station and the second base station based on the one or more BS registration lists, wherein the RUE to which the error measurement request message is transmitted is the common RUE.

The method may further comprise: requesting transmission of an RUE registration list to one or more base stations; receiving one or more RUE registration lists from the one or more base stations; and identifying the second base station to which the RUE is registered among the one or more base stations based on the one or more RUE registration lists, wherein the RUE is a common RUE registered in common with the first base station and the second base station, and the error measurement demand message is transmitted to the second base station having the common RUE.

[Advantageous Effects]

According to the present disclosure, the transmission timing errors of various base stations can be equated, and likewise, the transmission timing errors of various controllers can be equated. This effectively establishes ATS among communication nodes, encompassing base stations, controllers, as well as transmission and reception points (TRPs). Consequently, wireless devices can engage in isochronous/sequential cooperative operations, enabling tasks like ultra-precision applications. This, in turn, enhances the overall performance of the factory automation system.

[Description of Drawings]

FIG. 1 is a conceptual diagram illustrating a first exemplary embodiment of transmission timing errors.

FIG. 2 is a block diagram illustrating a first exemplary embodiment of a communication node.

FIG. 3 is a conceptual diagram illustrating a first exemplary embodiment of a method for avoiding transmission timing errors.

FIG. 4 is a sequence chart illustrating a second exemplary embodiment of a method for avoiding transmission timing errors.

FIG. 5 is a block diagram illustrating a first exemplary embodiment of a format 1 of the error measurement request message.

FIG. 6 is a block diagram illustrating a first exemplary embodiment of a format 1 of the error measurement response message.

FIG. 7 is a block diagram illustrating a first exemplary embodiment of a format 2 of the error measurement request message.

FIG. 8 is a block diagram illustrating a first exemplary embodiment of a format 2 of the error measurement response message.

FIG. 9 is a sequence chart illustrating a third exemplary embodiment of a method for avoiding transmission timing errors.

FIG. 10 is a block diagram illustrating a first exemplary embodiment of a format 3 of the error measurement request message.

FIG. 11 is a sequence chart illustrating a fourth exemplary embodiment of a method for avoiding transmission timing errors.

FIG. 12 is a sequence chart illustrating a fifth exemplary embodiment of a method for avoiding transmission timing errors.

FIG. 13 is a sequence chart illustrating a first exemplary embodiment of a method for exchanging BS registration lists.

FIG. 14 is a sequence chart illustrating a first exemplary embodiment of a method for exchanging RUE registration lists.

FIG. 15 is a conceptual diagram illustrating a first exemplary embodiment of a cooperation scenario between BSs.

FIGS. 16A and 16B are sequence charts illustrating a first exemplary embodiment of a method for measuring and delivering differences between transmission timing errors.

FIG. 17 is a conceptual diagram illustrating a second exemplary embodiment of a cooperation scenario between BSs.

FIGS. 18A and 18B are sequence charts illustrating a second exemplary embodiment of a method for measuring and delivering differences between transmission timing errors.

FIG. 19 is a conceptual diagram illustrating a sixth exemplary embodiment of transmission timing errors.

FIG. 20 is a conceptual diagram illustrating a first exemplary embodiment of a cooperation scenario of a BS and TRPs.

FIGS. 21A and 21B are sequence charts illustrating a third exemplary embodiment of a method for measuring and delivering differences between transmission timing errors.

FIGS. 22A and 22B are sequence charts illustrating a fourth exemplary embodiment of a method for measuring and delivering differences between transmission timing errors.

FIG. 23 is a sequence chart illustrating a seventh exemplary embodiment of a method for avoiding transmission timing errors.

FIG. 24 is a conceptual diagram illustrating a first exemplary embodiment of a cooperation scenario of TRPs.

FIGS. 25A and 25B are sequence charts illustrating a fifth exemplary embodiment of a method for measuring and delivering differences between transmission timing errors.

[Mode for Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".

In exemplary embodiments of the present disclosure, "(re)transmission" may mean "transmission", "retransmission", or "transmission and retransmission", "(re)configuration" may mean "configuration", "reconfiguration", or "configuration and reconfiguration", "(re)connection" may mean "connection", "reconnection", or "connection and reconnection", and "(re)access" may mean "access", "re-access", or "access and re-access".

In the present disclosure, a time may refer to a 'time point', and a time point may mean a time. A transmission time may mean a transmission start time or a transmission end time, and a reception time may mean a reception start time or a reception end time.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication system to which exemplary embodiments according to the present disclosure are applied will be described. The communication system to which the exemplary embodiments according to the present disclosure are applied is not limited to the contents described below, and the exemplary embodiments according to the present disclosure may be applied to various communication systems. Here, the communication system may be used in the same sense as a communication network.

In exemplary embodiments, "an operation (e.g., transmission operation) is configured" may mean that "configuration information (e.g., information element(s) or parameter(s)) for the operation and/or information indicating to perform the operation is signaled". "Information element(s) (e.g., parameter(s)) are configured" may mean that "corresponding information element(s) are signaled". The signaling may be at least one of system information (SI) signaling (e.g., transmission of system information block (SIB) and/or master information block (MIB)), RRC signaling (e.g., transmission of RRC parameters and/or higher layer parameters), MAC control element (CE) signaling, or PHY signaling (e.g., transmission of downlink control information (DCI), uplink control information (UCI), and/or sidelink control information (SCI)).

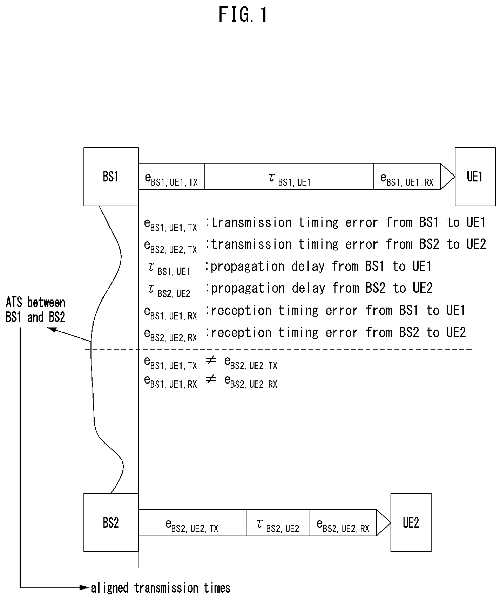

FIG. 1 is a conceptual diagram illustrating a first exemplary embodiment of transmission timing errors.

Referring to FIG. 1, in order to achieve absolute time synchronization (ATS) in a wireless communication-based factory automation system (hereinafter referred to as 'wireless factory automation system'), timing errors may be problematic. The wireless factory automation system may be interpreted as a wireless communication system or wireless communication network. The timing errors may include transmission timing error(s) and/or reception timing error(s). The transmission timing error may refer to a difference between a transmission time point configured for a transmission signal and an actual transmission time point of the transmission signal. A cause of variability of the actual transmission time point may be regarded as a uncontrollable jitter such as a hardware impairment of a transmitter. The reception timing error may refer to a difference between an accurate reception time point and a reception time point obtained by timing estimation.

The transmission timing error may vary due to an inherent hardware impairment of each of communication nodes (e.g., base stations (BSs), transmission and reception points (TRPs), nodes, controllers, wireless devices, user equipments (UEs), or the like). It may be impossible to eliminate a transmission timing error on a single one-to-one link. A UE1 managed and/or controlled by a BS1 may exist, and a UE2 managed and/or controlled by a BS2 may exist. Each of the UE1 and UE2 may be a wireless device. The BS1 and BS2 may be connected by a wire. Synchronization between the BS1 and BS2 may be ATS.

When the BS1 transmits a signal to the UE1, in addition to a propagation delay $\tau_{BS1,UE1}$, a transmission timing error $e_{BS1,UE1,TX}$ occurring at the BS1 and a reception timing error $e_{BS1,UE1,RX}$ occurring at the UE1 may exist. The propagation delay may be a radio propagation delay. The reception timing error may be overcome to some extent through a sophisticated design of a physical layer numerology. For example, a reception timing error with a length of several samples may occur through design of a very short time resolution (e.g., a sample length in the time domain), and impacts of the reception timing error may be insignificant. Since the transmission timing error is due to a hardware impairment inherent in a communication node, the BS1 and/or UE1 cannot know the transmission timing error. Also, the BS1 and/or UE1 cannot control the transmission timing error.

When the BS2 transmits a signal to UE2, the in addition to a radio propagation delay $\tau_{BS2,UE2}$, a transmission timing error $e_{BS2,UE2,TX}$ occurring at the BS2 and a reception timing error $e_{BS2,UE2,RX}$ occurring at the UE2 may exist. The receive timing error may be overcome to some extent through a sophisticated design of a physical layer numerology. Since the transmission timing error is due to a hardware impairment inherent in a communication node, the BS2 and/or UE2 cannot know the transmission timing error. Also, the BS2 and/or UE2 cannot control the transmission timing error.

UEs managed and/or controlled by a BS may be subject to a common transmission timing error for the BS. Times of the UEs controlled according to an absolute time of the BS may not be aligned. The common transmission timing error may not affect operations that the UEs perform isochronously/sequentially at absolute timing(s). Different transmission timing errors for each BS may occur between UEs belonging to different BSs. Isochronous/sequential operations may not be performed at absolute timing(s) due to the transmission timing errors. The isochronous/sequential operations in the present disclosure may refer to 'isochronous operations', 'sequential operations', or 'isochronous and sequential operations'. In order to achieve ATS in the wireless factory automation system, methods for reducing impacts of a transmission timing error between UEs belonging to different BSs, methods for reducing a transmission timing error between UEs belonging to multiple TRPs belonging to one BS, and/or the like may be required.

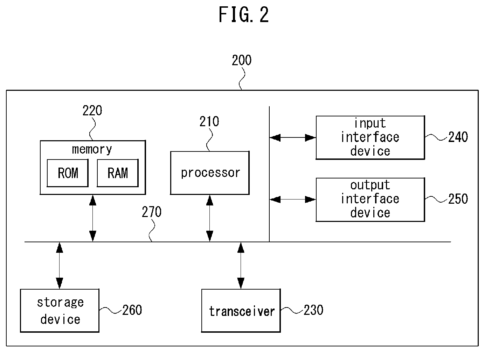

FIG. 2 is a block diagram illustrating a first exemplary embodiment of a communication node.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

However, each component included in the communication node 200 may not be connected to the common bus 270 but may be connected to the processor 210 via an individual interface or a separate bus. For example, the processor 210 may be connected to at least one of the memory 220, the transceiver 230, the input interface device 240, the output interface device 250 and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Hereinafter, operation methods of a communication node will be described. Even when a method (e.g., transmission or reception of a signal) performed at a first communication node among communication nodes is described, a corresponding second communication node may perform a method (e.g., reception or transmission of the signal) corresponding to the method performed at the first communication node. That is, when an operation of a base station is described, a terminal (e.g., UE) corresponding to the base station may perform an operation corresponding to the operation of the base station. Conversely, when an operation of a terminal is described, a base station corresponding to the terminal may perform an operation corresponding to the operation of the terminal.

In the present disclosure, an apparatus (or entity) for managing and/or controlling wireless devices (e.g., UEs) may be a BS, cell, primary cell, secondary cell, and/or TRP.

In order to achieve ATS between UEs belonging to different BSs (or different TRPs) in the wireless factory automation system, a reference UE (RUE) may be introduced. The impact of transmission timing errors may be reduced by the RUE. The RUE may be expressed by other names (e.g., first UE, first terminal, reference terminal, reference unit, etc.).

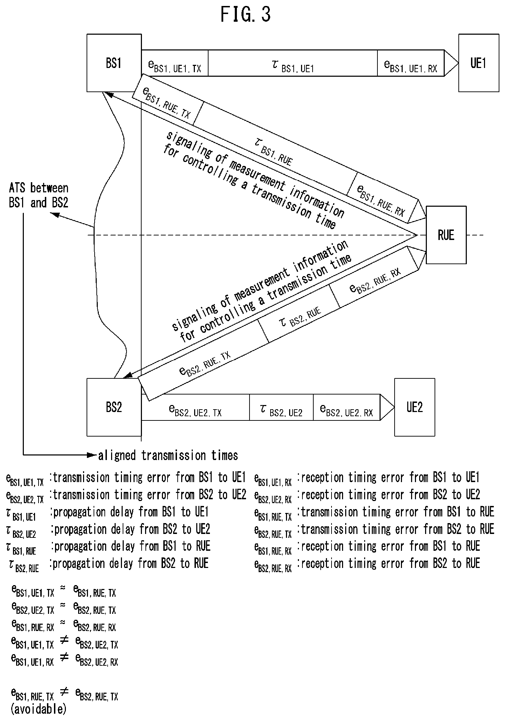

FIG. 3 is a conceptual diagram illustrating a first exemplary embodiment of a method for avoiding transmission timing errors.

Referring to FIG. 3, a BS1 and a BS2 may be different BSs. The BS1 may manage and/or control one or more UEs (e.g., UE1). The BS2 may manage and/or control one or more UEs (e.g., UE2). When the BS1 transmits a signal to the UE1, in addition to a radio propagation delay $\tau_{BS1,UE1}$, a transmission timing error $e_{BS1,UE1,TX}$ occurring at the BS1 and a reception timing error $e_{BS1,UE1,RX}$ occurring at the BS2 may exist. The reception timing error may be overcome to some extent through a sophisticated design of a physical layer numerology. Since the transmission timing error is due to a hardware impairment inherent in a communication node, the BS1 and/or UE1 cannot know the transmission timing error. Also, the BS1 and/or UE1 cannot control the transmission timing error.

When the BS2 transmits a signal to the UE2, in addition to a radio propagation delay $\tau_{BS2,UE2}$, a transmission timing error $e_{BS2,UE2,TX}$ occurring at the BS2 and a reception timing error $e_{BS2,UE2,RX}$ occurring at the UE2 may exist. The reception timing error may be overcome to some extent through a sophisticated design of a physical layer numerology. Since the transmission timing error is due to a hardware impairment inherent in a communication node, the BS2 and/or UE2 cannot know the transmission timing error. Also, the BS2 and/or UE2 cannot control the transmit timing error.

When an RUE is located between the BS1 and the BS2, a transmission timing error occurring at each BS may not be identified, but a difference between transmission timing errors of the BS1 and BS2 may be identified using the RUE. The BS1 and BS2 can know the location of the RUE. The location of the RUE may be a location with good radio fading channel qualities for the BS1 and BS2, a location with no change in the radio fading channel qualities, or a location where a change in the radio fading channel qualities is insignificant. The BS1 and/or RUE may know a propagation delay $\tau_{BS1,RUE}$ from the BS1 to the RUE, and the BS2 and/or RUE may know a propagation delay $\tau_{BS2,RUE}$ from the BS2 to the RUE.

The reception timing errors $e_{BS1,RUE,RX}$ and $e_{BS2,RUE,RX}$ for the BS1, BS2, and RUE may be almost the same when the radio link quality of each of the BS1 and BS2 is above a predefined criterion. In the present disclosure, the BS1 and BS2 may be assumed to be connected by wire, and synchronization between the BS1 and BS2 may be assumed to be absolute synchronization.

The BS1 and BS2 may transmit signals for absolute synchronization simultaneously or at a predefined time (e.g., sample time point). The signal for absolute synchronization may be referred to as an absolute synchronization signal. The absolute synchronization signal may be transmitted periodically or aperiodically. The RUE may measure a difference between an arrival time $T_{BS1,RUE}$ of the signal (e.g., absolute synchronization signal) transmitted from the BS1 and an arrival time $T_{BS2,RUE}$ of the signal (e.g., absolute synchronization signal) transmitted from the BS2. In other words, the RUE may measure $T_{BS1,RUE} - T_{BS2,RUE}$. $T_{BS1,RUE}$ may mean a time at which the absolute synchronization signal transmitted by the BS1 arrives at the RUE. $T_{BS2,RUE}$ may mean a time at which the absolute synchronization signal transmitted by the BS2 arrives at the RUE.

[Equation 1]

$$T_{BS1,RUE} = e_{BS1,RUE,TX} + \tau_{BS1,RUE} + e_{BS1,RUE,RX}$$

$$T_{BS2,RUE} = e_{BS2,RUE,TX} + \tau_{BS2,RUE} + e_{BS2,RUE,RX}$$

$$T_{BS1,RUE} - T_{BS2,RUE} \approx \left(e_{BS1,RUE,TX} - e_{BS2,RUE,TX}\right) + \left(\tau_{BS1,RUE} - \tau_{BS2,RUE}\right)$$

When the difference $\tau_{BS1,RUE} - \tau_{BS2,RUE}$ between propagation delays in Equation 1 is denoted as A, the RUE may measure or estimate a difference B between the transmission timing errors based on the difference between arrival times and A. B may be defined as in Equation 2 below.

[Equation 2]

$$B = e_{BS1,RUE,TX} - e_{BS2,RUE,TX} = \left(T_{BS1,RUE} - T_{BS2,RUE}\right) - A$$

The RUE may transmit (e.g., signal) B or information related to B to the BS1 and/or the BS2. The BS1 and/or BS2 may receive B or information related to B from the RUE. The BS1 and/or BS2 may transmit B or information related to B to a control station (e.g., controller) that manages and/or controls the BSs. The control station may receive B or information related to B from the BS1 and/or BS2. The control station may adjust transmission times (e.g., sample time points) of the BS1 and/or BS2 using B or information related to B. Alternatively, the RUE may transmit (e.g., signal) information on the transmission times (e.g., sample time points) of the BS1 and/or BS2 to the BS1 and/or BS2 without a control station.

According to the above-described operation, although the transmission timing errors $e_{BS1,UE1,TX}$ and $e_{BS2,UE2,TX}$ for the UE1 and UE2 belonging to different BSs may not be eliminated, the transmission timing errors $e_{BS1,UE1,TX}$ and $e_{BS2,UE2,TX}$ may be adjusted to be equal. In other words, if it is assumed that the transmission timing errors of the BS1 and BS2 do not change during a predefined time (e.g., $e_{BS1,UE1,TX} \approx e_{BS1,RUE,TX}$, $e_{BS2,UE2,TX} \approx e_{BS2,RUE,TX}$), the difference B between the transmission timing errors in Equation 2 may be obtained. The difference B in the transmission timing errors may be obtained using the RUE.

The BS2 may adjust the transmission timing by adding the difference B between the transmission timing errors to the existing transmission time. According to the above-described operation, the UE1 and UE2 may achieve ATS without impacts of the transmission timing errors. Accordingly, sophisticated cooperative operations may be performed.

When the control station or the RUE transmits information requesting adjustment of the transmission timing for each BS, the information may include the difference B between transmission timing errors and/or an indication of a scheme for adjusting the transmission timing errors to be equal. The scheme of adjusting the transmission timing errors to be equal may be a scheme of advancing the transmission timing of the BS1 by B/2 and/or a scheme of delaying the transmission timing of the BS2 by B/2.

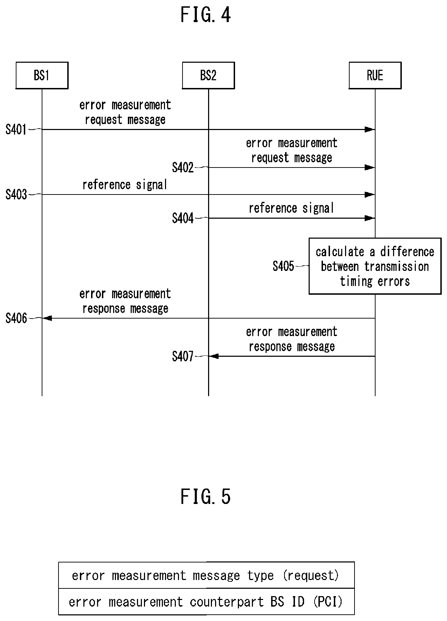

FIG. 4 is a sequence chart illustrating a second exemplary embodiment of a method for avoiding transmission timing errors.

Referring to FIG. 4, an RUE may be registered with a BS1 and/or BS2, and the RUE may know information on a propagation delay for the BS1 and/or information on a propagation delay for the BS2 in advance. The locations of the RUE, BS1, and BS2 may be fixed, a distance between the RUE and the BS1 and a distance between the RUE and the BS2 may be identified based on the locations of the RUE, BS1, and BS2, and the propagation delays may be identified based on the identified distances and a propagation speed in a free space (e.g., the speed c of light).

The BS1 may transmit an error measurement request message to the RUE (S401). After transmitting the error measurement request message, the BS1 may transmit a reference signal for error measurement to the RUE (S403). The BS2 may transmit an error measurement request message to the RUE (S402). After transmitting the error measurement request message, the BS2 may transmit a reference signal for error measurement to the RUE (S404). The error measurement request message may include reference signal information (e.g., resource information, transmission resource information). The reference signal may be a demodulation reference signal (DMRS), channel state information-reference signal (CSI-RS), positioning reference signal (PRS), and/or phase tracking-reference signal (PT-RS). The BS(s) may simultaneously transmit the reference signal(s) to the RUE. Alternatively, the BS(s) may sequentially transmit the reference signal(s) to the RUE.

The RUE may receive the error measurement request message(s) from the BS1 and/or BS2. When the error measurement request message is received, the RUE may determine that error measurement is requested. The RUE may receive the reference signals based on the error measurement request messages (e.g., resources indicated by the error measurement request message) from the BS1 and BS2, and may estimate timings based on the received reference signals. After estimating the timings for the BS1 and BS2, the RUE may calculate a difference between a transmission timing error of the BS1 and a transmission timing error of the BS2 based on Equations 1 and 2 (S405). The RUE may transmit an error measurement response message including the difference (e.g., difference value) between the transmission timing errors to the BS1 (S406). The RUE may transmit an error measurement response message including the difference between the transmission timing errors to the BS2 (S407). The difference between the transmission timing errors may mean a difference between the transmission timing of the BS1 and the transmission timing of the BS2.

The BS1 and BS2 may receive the error measurement response message from the RUE, and may improve accuracy of absolute synchronization based on the difference between the transmission timing errors included in the error measurement response message. For example, when UEs belonging to the BSs perform cooperative operations, each of the BSs may transmit a signal earlier or later by the difference between the transmission timing errors in order to improve accuracy of absolute synchronization. Each of the error measurement request message and the error measurement response message may be transmitted based on at least one of SI signaling, RRC signaling, MAC CE signaling, or PHY signaling.

FIG. 5 is a block diagram illustrating a first exemplary embodiment of a format 1 of the error measurement request message.

Referring to FIG. 5, the error measurement request message may include an error measurement message type field and an error measurement counterpart BS identifier (ID) field. The error measurement message type field may be referred to as a 'type field', and the error measurement counterpart BS ID field may be referred to as a 'counterpart BS field'.

The type field may indicate the type of the message. The type field set to a first value (e.g., 0) may indicate an error measurement request message. In this case, the type of the error measurement request message may be an error measurement request. The type field set to a second value (e.g., 1) may indicate an error measurement response message. In this case, the type of the error measurement message may be an error measurement response. The type field set to a third value (e.g., 2) may indicate a guide message (e.g., error measurement guide message). In this case, the type of the error measurement message may be an error measurement guide.

The counterpart BS field may indicate an ID of a counterpart BS for which error measurement is desired. The counterpart BS field may be configured with information (e.g., physical cell ID (PCI), MAC address) capable of identifying the BS. For example, in the exemplary embodiment of FIG. 4, the counterpart BS field included in the error measurement request message transmitted by the BS1 may be set to the ID of BS2, and the counterpart BS field included in the error measurement request message transmitted by the BS2 may be set to the ID of BS1.

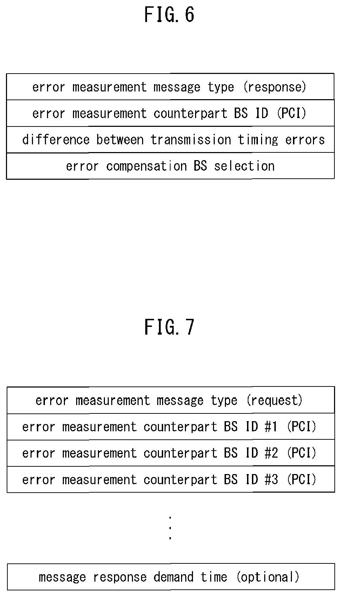

FIG. 6 is a block diagram illustrating a first exemplary embodiment of a format 1 of the error measurement response message.

Referring to FIG. 6, the error measurement response message may include an error measurement message type field, an error measurement counterpart BS ID field, a transmission timing error difference field, and an error compensation BS selection field. The error measurement message type field may be referred to as a 'type field', the error measurement counterpart BS ID field may be referred to as a 'counter BS field', the transmission timing error difference field may be referred to as a 'timing difference field', and the error compensation BS selection field may be referred to as a 'compensation BS field'.

The type field may indicate that the type of the message is an error measurement response message. The counterpart BS field of the error measurement response message may be configured identically to the counterpart BS field of the error measurement request message. The timing difference field may indicate a difference between transmission timing errors with the counterpart BS. For example, the timing difference field may indicate a difference between transmission timing errors measured by the RUE based on the reference signals received from the BSs. The timing difference field may include information indicating whether the transmission timing of the BS is earlier or slower, and the information may indicate a sign (e.g., + or -).

The compensation BS field may indicate a BS to compensate for the difference between the transmission timing errors. When the difference between the transmission timing errors is received, the BS indicated by the compensation BS field among the BS1 and BS2 may compensate for the difference between the transmission timing errors. When the BS that compensates for the difference between the transmission timing errors is negotiated in advance, the BS(s) may ignore the compensation BS field. The compensation BS field set to a first value (e.g., 0) may indicate that the counterpart BS compensates for the difference between the transmission timing errors. The compensation BS field set to a second value (e.g., 1) may indicate that the BS that transmitted the error measurement request message compensates for the difference between the transmission timing errors. The compensation BS field set to a third value (e.g., 2) may indicate that a pre-negotiated BS compensates for the difference between the transmission timing errors. Alternatively, the compensation BS field set to the third value (e.g., 2) may mean 'don't care'.

FIG. 7 is a block diagram illustrating a first exemplary embodiment of a format 2 of the error measurement request message.

Referring to FIG. 7, the error measurement request message may include an error measurement message type field, a plurality of error measurement counterpart BS ID fields, and a message response request time field. The error measurement message type field may be referred to as a 'type field', the error measurement counterpart BS ID field may be referred to as a 'counterpart BS field', and the message response request time field may be referred to as a 'request time field'. Alternatively, the request time field may not be included in the error measurement request message. When a BS requests differences between transmission timing errors for a plurality of BSs, the error measurement request message shown in FIG. 7 may be used. If there are a plurality of counterpart BSs for error measurement, as many counterpart BS fields as the number of the plurality of counterpart BSs may be required. The request time field may indicate a time (e.g., end time) at which a reception operation of the error measurement response message is performed.

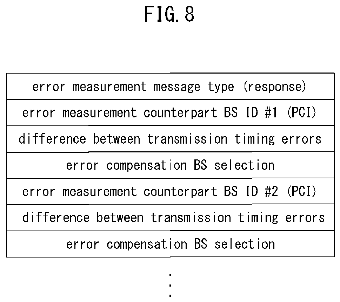

FIG. 8 is a block diagram illustrating a first exemplary embodiment of a format 2 of the error measurement response message.

Referring to FIG. 8, when the error measurement request message shown in FIG. 7 is received, the RUE may transmit an error measurement response message shown in FIG. 8. When the error measurement request message indicates a plurality of counterpart BSs for error measurement, the error measurement response message may include a difference of a transmission timing error of each of the plurality of counterpart BSs. If it is difficult to transmit the differences between the transmission timing errors for all of the counterpart BSs until a time indicated by the request time field, the error measurement response message may include the respective differences between transmission timing errors of as many counterpart BSs as transmission thereof is possible. Alternatively, if it is difficult to transmit the differences between the transmission timing errors for all of the counterpart BSs until the time indicated by the request time field, an additional time for transmission of the differences between the transmission timing errors may be requested.

When the error measurement request message shown in FIG. 7 and the error measurement response message shown in FIG. 8 are used, the number of exchanges of messages for error measurement may decrease. Accordingly, radio resources may be efficiently used. When a cooperative operation with the BSs is required, the error measurement request message shown in FIG. 7 and the error measurement response message shown in FIG. 8 may be used.

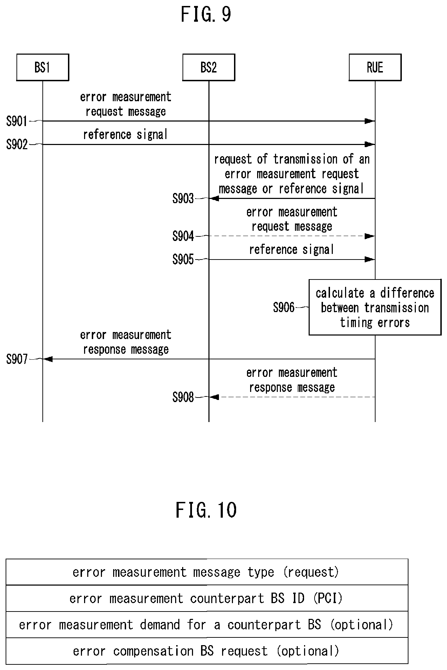

In the exemplary embodiment of FIG. 4, each of the BS1 and BS2 may transmit the error measurement request message to the RUE without a request from the RUE. For cooperation, the BS1 and BS2 may simultaneously or sequentially transmit the error measurement request messages to the RUE. When the error measurement request messages are sequentially transmitted, an interval between transmission of the error measurement request message of the BS1 and transmission of the error measurement request message of the BS2 may be short. Only one of the BSs may transmit the error measurement request message. In an exemplary embodiment of FIG. 9 below, one of the BS1 and BS2 may transmit the error measurement request message.

FIG. 9 is a sequence chart illustrating a third exemplary embodiment of a method for avoiding transmission timing errors.

Referring to FIG. 9, a BS1 may transmit an error measurement request message to an RUE (S901). The error measurement request message may include reference signal information (e.g., resource information, transmission resource information). After transmitting the error measurement request message, the BS1 may transmit a reference signal for error measurement to the RUE (S902). The RUE may receive the error measurement request message from the BS1. When the error measurement request message is received, the RUE may determine that error measurement is requested. The RUE may receive the reference signal based on the error measurement request message (e.g., resources indicated by the error measurement request message) from the BS1 and may estimate a timing based on the received reference signal.

If the error measurement request message is not received from a counterpart BS (e.g., BS2) within a preconfigured time from a reception time of the error measurement request message of the BS1, the RUE may request the BS2 to transmit an error measurement request message or a reference signal (S903). When transmission of an error measurement request message is requested from the RUE, the BS2 may transmit an error measurement request message to the RUE (S904). The error measurement request message may include reference signal information (e.g., resource information, transmission resource information). After transmitting the error measurement request message, the BS2 may transmit a reference signal for error measurement to the RUE (S905). When transmission of a reference signal is requested from the RUE, the BS2 may transmit a reference signal for error measurement to the RUE (S905). In other words, when transmission of a reference signal is requested from the RUE, transmission of the error measurement request message of the BS2 may be omitted.

As another method, when transmission of the error measurement request message or transmission of the reference signal is requested from the RUE, the BS2 may perform the steps S904 and S905 or may perform only the step S905 as needed. If it is required to receive information on a difference between transmission timing errors, the BS2 may perform the steps S904 and S905. If it is not required to receive information on a difference between transmission timing errors, the BS2 may perform only the step S905. In other words, if it is not required to receive information on a difference between transmission timing errors, the BS2 may not perform the step S904. The RUE may transmit information on a difference between transmission timing errors only to the BS that has transmitted the error measurement request message.

The RUE may receive the reference signal from the BS2 and may estimate a timing based on the received reference signal. After estimating the timings for the BS1 and BS2, the RUE may calculate a difference between the transmission timing error of the BS1 and the transmission timing error of the BS2 based on Equations 1 and 2 (S906). The RUE may transmit an error measurement response message including the difference (e.g., difference value) between the transmission timing errors to the BS1 (S907). When the error measurement request message of the BS2 is received, the RUE may transmit an error measurement response message including the difference between the transmission timing errors to the BS2 (S908).

When the error measurement request message of the BS2 is not received (e.g., when only the reference signal of the BS2 is received), the RUE may not transmit the error measurement response message including the difference between the transmission timing errors to the BS2. In this case, the BS1 may receive the error measurement response message from the RUE, and the BS2 may not receive the error measurement response message from RUE. When the error measurement response message is transmitted only to the BS1, the error compensation BS selection field included in the error measurement response message may indicate that the BS1 compensates for the difference between the transmission timing errors.

The BS1 and/or BS2 may receive the error measurement response message from the RUE, and may improve accuracy of absolute synchronization based on the difference between the transmission timing errors included in the error measurement response message. For example, when UEs belonging to the BSs perform cooperative operations, each of the BSs may transmit a signal earlier or later by the difference between the transmission timing errors in order to improve accuracy of absolute synchronization. In the exemplary embodiment of FIG. 9, a format 3 of the error measurement request message may be used.

FIG. 10 is a block diagram illustrating a first exemplary embodiment of a format 3 of the error measurement request message.

Referring to FIG. 10, the error measurement request message may include an error measurement message type field, an error measurement counterpart BS ID field, an error measurement request field for a counterpart BS, and an error compensation BS request field. The error measurement message type field may be referred to as a 'type field', the error measurement counterpart BS ID field may be referred to as a 'counterpart BS field', the error measurement request field for the counterpart BS may be referred to as a 'measurement request field', and the error compensation BS request field may be referred to as a 'BS request field'.

The measurement request field set to a first value (e.g., 0) may indicate that transmission of an error measurement request message or reference signal is not requested to the counterpart BS. The measurement request field set to a second value (e.g., 1) may indicate that transmission of an error measurement request message is requested to the counterpart BS. The measurement request field set to a third value (e.g., 2) may indicate that transmission of a reference signal is requested to the counterpart BS.

The RUE may receive the error measurement request message from the BS1 and request the BS2 to transmit an error measurement request message or reference signal based on a value of the measurement request field included in the error measurement request message. Alternatively, the RUE may not make any request to the BS2 based on the value of the measurement request field included in the error measurement request message of the BS1. In this case, the RUE may wait to receive an error measurement request message or reference signal from the BS2 without a request to the BS2.

The BS request field may indicate a BS (e.g., primary BS) that compensates for an error (e.g., difference between transmission timing errors). The BS request field set to a first value (e.g., 0) may indicate that the counterpart BS (e.g., BS2) compensates for a difference between transmission timing errors. The BS request field set to a second value (e.g., 1) may indicate that the BS1 compensates for a difference between transmission timing errors. The RUE may identify the value of the BS request field of the error measurement request message(s) received from the BS(s), and set the value of the error compensation BS selection field of the error measurement response message based on the identified value.

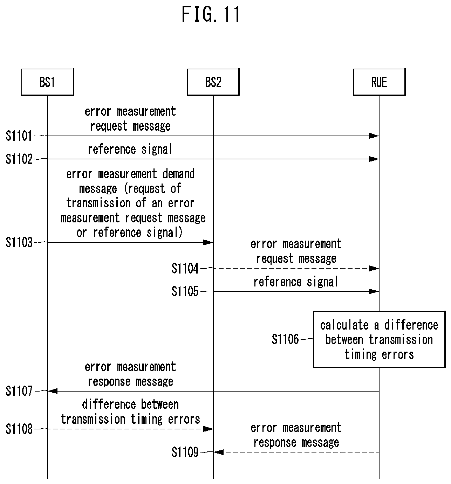

In the exemplary embodiment of FIG. 9, the RUE may request the BS2 to transmit an error measurement request message or reference signal for error measurement. For the above-described operation, the RUE may use radio resources. In an exemplary embodiment of FIG. 11 below, the operation in which the RUE requests the BS2 to transmit an error measurement request message or reference signal for error measurement may be omitted, and waste of radio resources may be prevented.

FIG. 11 is a sequence chart illustrating a fourth exemplary embodiment of a method for avoiding transmission timing errors.

Referring to FIG. 11, a BS1 may transmit an error measurement request message to an RUE (S1101). The error measurement request message may include reference signa information (e.g., resource information, transmission resource information). After transmitting the error measurement request message, the BS1 may transmit a reference signal for error measurement to the RUE (S1102). The RUE may receive the error measurement request message from the BS1. When the error measurement request message is received, the RUE may determine that error measurement is requested. The RUE may receive the reference signal based on the error measurement request message (e.g., resources indicated by the error measurement request message) from the BS1, and may estimate a timing based on the received reference signal.

The BS1 and BS2 may be connected by wire. The BS1 may transmit an error measurement demand message to the BS2 (S1103). The error measurement demand message may request transmission of at least one of an error measurement request message and a reference signal to the RUE. The BS1 may immediately transmit the error measurement demand message to the BS2, and accordingly, a time for the RUE to measure a difference between transmission timing errors may be reduced.

The BS2 may receive the error measurement demand message from the BS1. When transmission of an error measurement request message is requested from the BS1, the BS2 may transmit an error measurement request message to the RUE (S1104). The error measurement request message may include reference signal information (e.g., resource information, transmission resource information). After transmitting the error measurement request message, the BS2 may transmit a reference signal for error measurement to the RUE (S1105). When transmission of a reference signal is requested from the BS1, the BS2 may transmit a reference signal for error measurement to the RUE (S1105). In other words, when transmission of a reference signal is requested from the BS1, transmission of the error measurement request message from the BS2 may be omitted.

A format of the error measurement request message transmitted by the BS1 may be the format 3 shown in FIG. 10. The error measurement request field for the counterpart BS included in the error measurement request message of the BS1 may indicate that the RUE does not transmit any request to the counterpart BS (e.g., BS2). The error compensation BS request field included in the error measurement request message of the BS1 may indicate that the BS1 compensates for a difference between transmission timing errors.

The RUE may receive the reference signal from the BS2, and may estimate a timing based on the received reference signal. After estimating the timings for the BS1 and BS2, the RUE may calculate a difference between transmission timing errors of the BS1 and the transmission timing error of the BS2 based on Equations 1 and 2 (S1106). The RUE may transmit an error measurement response message including the difference (e.g., difference value) between the transmission timing errors to the BS1 (S1107). When the error measurement request message of the BS2 is received, the RUE may transmit an error measurement response message including the difference between the transmission timing errors to the BS2 (S1109).

When the error measurement request message of the BS2 is not received (e.g., when only the reference signal of the BS2 is received), the RUE may not transmit the error measurement response message including the difference between transmission timing errors to the BS2. In this case, the BS1 may receive the error measurement response message from the RUE, and the BS2 may not receive the error measurement response message from the RUE.

The BS1 may transmit the difference between transmission timing errors to the BS2 (S1108). The step S1108 may be performed when the BS2 fails to receive an error measurement response message including the difference between transmission timing errors from the RUE. In other words, if the error measurement request message of the BS1 requests transmission of the reference signal in the step S1103, the BS1 may predict that BS2 does not receive the error measurement response message including the difference between transmission timing errors from the RUE. In this case, in the step S1108, the BS1 may inform the BS2 of the difference between transmission timing errors.

The accuracy of absolute synchronization between the BSs may be improved based on the difference between transmission timing errors included in the error measurement response message. For example, when UEs belonging to the BSs perform a cooperative operation, each of the BSs may transmit a signal earlier or later by the difference between transmission timing errors in order to improve accuracy of absolute synchronization.

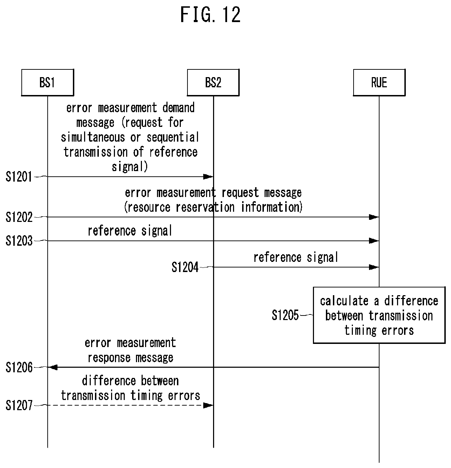

FIG. 12 is a sequence chart illustrating a fifth exemplary embodiment of a method for avoiding transmission timing errors.

Referring to FIG. 12, a BS1 may transmit an error measurement demand message to a BS2 (S1201). The error measurement demand message may include information indicating simultaneous or sequential transmission of reference signals. When simultaneous transmission of reference signals is difficult, sequential transmission of reference signals may be performed. The BS2 may receive the error measurement demand message from the BS1, and based on information included in the error measurement demand message, the BS2 may identify that simultaneous transmission or sequential transmission of reference signals is requested. In addition, the error measurement demand message may include resource information of reference signals, and reference signal(s) of the BS1 and/or BS2 may be transmitted in resources indicated by the error measurement demand message.

The BS1 may reserve resources (e.g., radio resources) for simultaneous or sequential transmission of reference signals. The BS1 may transmit an error measurement request message including resource reservation information of reference signals to an RUE (S1202). The error measurement request message may include resource reservation information (e.g., transmission resource information) of reference signals of the BS1 and/or resource reservation information (e.g., transmission resource information) of reference signals of the BS2. The RUE may receive the error measurement request message from the BS1 and may identify the resource reservation information of reference signals included in the error measurement request message. In addition, the BS2 may identify the resource reservation information of reference signals by receiving the error measurement request message of the BS1.

The BS1 may transmit reference signals to the RUE in resources indicated by the error measurement demand message and/or the error measurement request message (S1203). The BS2 may transmit reference signals to the RUE in resources indicated by the error measurement demand message and/or the error measurement request message (S1204). The reference signals may be transmitted based on a simultaneous transmission or sequential transmission scheme.

The RUE may receive the reference signals of the BS1 and the reference signals of the BS2 in the resources indicated by the error measurement message. The RUE may estimate timings based on the received reference signals. After estimating the timings for the BS1 and the BS2, the RUE may calculate a difference between a transmission timing error of the BS1 and a transmission timing error of the BS2 based on Equations 1 and 2 (S1205). The RUE may transmit an error measurement response message including the difference (e.g., difference value) between transmission timing errors to the BS1 (S1206). Since the error measurement request message is received from the BS1, the RUE may transmit the error measurement response message to the BS1.

The BS1 may receive the error measurement response message from the RUE, and may identify the difference between transmission timing errors included in the error measurement response message. The BS1 may inform the BS2 of the difference between transmission timing errors (S1207). The BS2 may receive the difference between transmission timing errors from the BS1. The accuracy of absolute synchronization between the BSs may be improved based on the difference between transmission timing errors included in the error measurement response message. For example, when UEs belonging to the BSs perform a cooperative operation, each of the BSs may transmit a signal earlier or later by the difference between transmission timing errors in order to improve accuracy of absolute synchronization.

In the above-described exemplary embodiments (e.g., the exemplary embodiments of FIGS. 5 to 11), the RUE may measure a difference of the transmission timing error with respect to the counterpart BS according to the request of the BS, and may report the difference of the transmission timing error to the BS. If there are many cooperating BSs and multiple RUEs, a procedure for the BS to identify which RUE among the RUEs registered to itself is connected to the cooperating BS (e.g., counterpart BS) may be required. The cooperating BS may be a BS desired to cooperate with.

The cooperating BSs may exchange lists of registered RUEs and may select one RUE among common RUEs based on the lists of registered RUEs. The list of registered RUEs may be referred to as an 'RUE registration list'. The RUE registration list may include information on one or more RUEs registered to the BS (e.g., cooperating BS). The RUE may deliver a list of BSs ('BS registration list') to which the RUE is registered. In the transmission procedure of the error measurement request message, the BS(s) may select the counterpart BS in consideration of the BS registration list. The BS registration list may include information on one or more BSs to which the RUE is registered.

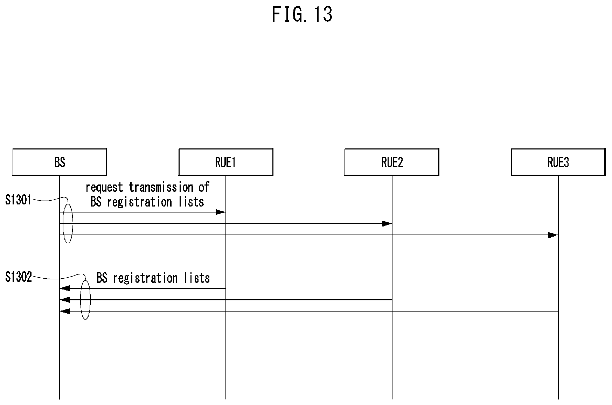

FIG. 13 is a sequence chart illustrating a first exemplary embodiment of a method for exchanging BS registration lists.

Referring to FIG. 13, a BS may request transmission of BS registration lists to RUEs (e.g., RUE1, RUE2, and RUE3) registered therewith (S1301). The RUEs (e.g., RUE1, RUE2, and RUE3) may receive the request for transmission of BS registrations list from the BS. In a step S1302, the RUE1 may transmit a BS registration list including information of BS(s) to which the RUE1 is registered to the BS, the RUE2 may transmit a BS registration list including information of BS(s) to which the RUE2 is registered to the BS, and the RUE3 may transmit a BS registration list including information of BS(s) to which the RUE3 is registered to the BS. The BS may receive the BS registration lists from the RUEs. The BS may identify the RUE(s) registered in the cooperating BS(s) (e.g., counterpart BS(s)) based on the BS registration lists, and may transmit error measurement request message(s) to the identified RUE(s). In other words, a first BS may identify a common RUE registered in common with the first BS and a second BS based on the BS registration lists.

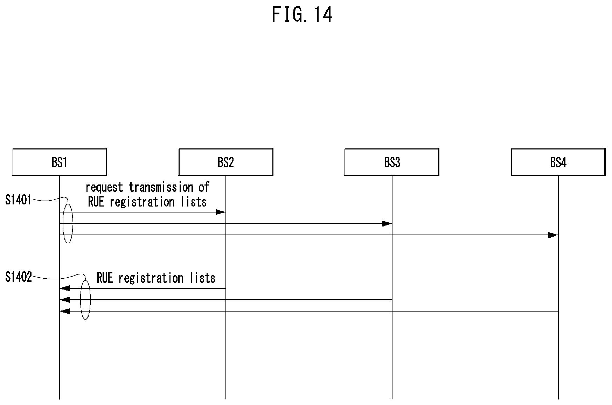

FIG. 14 is a sequence chart illustrating a first exemplary embodiment of a method for exchanging RUE registration lists.

Referring to FIG. 14, one or more RUEs may be registered with a BS. The BS may have an RUE registration list. The RUE registration list may include information on one or more RUEs registered to the BS. The BS may request transmission of RUE registration lists to neighboring BSs (e.g., BS2, BS3, and BS4) (S1401). The neighboring BSs may receive the request for transmission of RUE registration lists from the BS1. In a step S1402, the BS2 may transmit an RUE registration list including information of RUE(s) registered therewith to the BS1, the BS3 may transmit an RUE registration list including information of RUE(s) registered therewith to the BS1, and the BS4 may transmit an RUE registration list including information of RUE(s) registered therewith to the BS1.

The BS1 may receive the RUE registration lists from the neighboring BSs. The BS1 may identify RUEs registered with each BS based on the RUE registration lists. The BS1 may identify a BS having a common RUE based on the RUE registration lists. For example, the BS1 may determine that a common RUE registered with the BS1 and the BS2 exists. In this case, the BS1 may perform a method of avoiding transmission timing errors with the BS2. The BSs (e.g., BS1, BS2, BS3, and BS4) may be connected by wire. Since the exchange procedure of the RUE registration lists is performed over wires, radio resources are not wasted due to the exchange procedure of the RUE registration lists.

As another method proposed in the present disclosure, a primary BS may request error measurement to a common RUE among RUEs registered with neighboring BS(s). The primary BS may manage and/or control the cooperative BS(s) and may initiate the error measurement procedure. The neighboring BS(s) may be cooperating BS(s) for the primary BS. In other words, the neighboring BS(s) may be BS(s) the primary BS desires to cooperate with. The common RUE may mean an RUE registered with the BS(s).

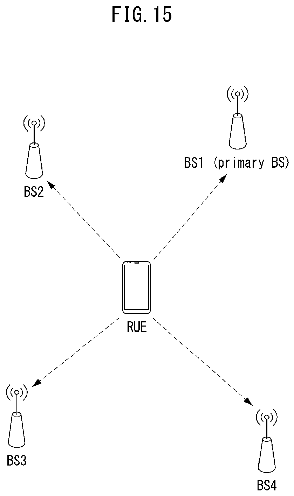

FIG. 15 is a conceptual diagram illustrating a first exemplary embodiment of a cooperation scenario between BSs.

Referring to FIG. 15, a BS1 among BSs may be a primary BS, and a BS2, BS3, and BS4 may be cooperating BSs for the BS1. The BS1, BS2, BS3, and BS4 may be connected to an RUE. In other words, the RUE may be registered with the BS1, BS2, BS3, and BS4. The RUE connected to (e.g., registered with) the BS1, BS2, BS3, and BS4 may be a common RUE. The BS1 (e.g., primary BS) may request transmission of reference signals from the BSs. The BS1 may request simultaneous or sequential transmission of reference signals. The BSs may transmit reference signals. The RUE may measure the reference signal received from each of the BSs, and may calculate a difference between transmission timing errors of the BSs based on results of the measurement. The RUE may inform the BS(s) of the difference between transmission timing errors.

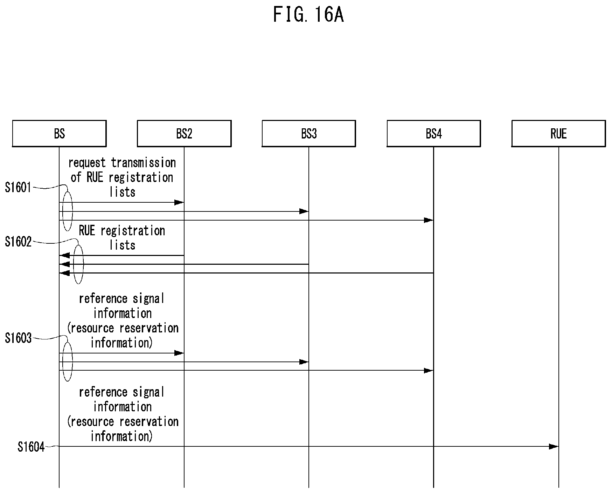

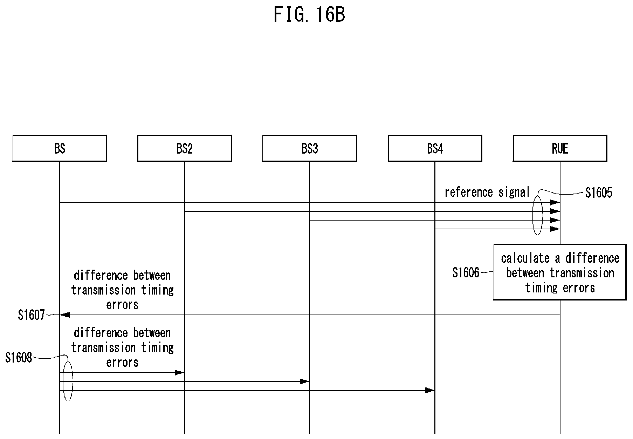

FIGS. 16A and 16B are sequence charts illustrating a first exemplary embodiment of a method for measuring and delivering differences between transmission timing errors.

Referring to FIGS. 16A and 16B, the exemplary embodiments of FIGS. 16A and 16B may be applied to the cooperation scenario shown in FIG. 15, the procedure of FIG. 16A may be performed prior to the procedure of FIG. 16B, and after completion of the procedure of FIG. 16A, the procedure of FIG. 16B may be performed. A BS1 may be a primary BS, and a BS2, BS3, and BS4 may be cooperating BSs for the BS1. An RUE may be a common RUE for the BS1, BS2, BS3, and BS4. The procedures of FIGS. 16A and 16B may be respectively referred to as a configuration step (i.e., FIG. 16A) for measuring differences between transmission timing errors and a measurement/delivery step (i.e., FIG. 16B) of differences between transmission timing errors. In the configuration step for measuring differences between transmission timing errors, the BS1 (e.g., primary BS) may request transmission of RUE registrations list to cooperating BSs (e.g., BS2, BS3, and BS4) (S1601). The cooperating BSs may be neighboring BSs or counterpart BSs of the BS1.

The cooperating BSs may receive the request for transmission of RUE registration lists from the BS1. In a step S1602, the BS2 may transmit an RUE registration list including information of RUE(s) registered therewith to the BS1, the BS3 may transmit an RUE registration list including information of RUE(s) registered therewith to the BS1, and the BS4 may transmit an RUE registration list including information of RUE(s) registered therewith to the BS1. The BS1 may receive RUE registration lists from the neighboring BSs. The BS1 may identify an RUE registered in common with the cooperating BSs and may determine the BS1 as a common RUE based on the RUE registration lists. In other words, the BS1 may identify a common RUE registered with the BS1, BS2, BS3, and BS4. The BS1, BS2, BS3, and BS4 may be connected to the common RUE.

The BS1 may negotiate with the cooperating BSs a time at which transmission of reference signals is possible, and based on a result of the negotiation, may reserve radio resources for transmission of reference signals. The BS1 may transmit reference signal information (e.g., resource reservation information, transmission resource information) to each of the cooperating BSs (S1603). The reference signal information may include resource reservation information of reference signals for each of the cooperating BSs. The resource reservation information of reference signals may indicate radio resources reserved for transmission of reference signals and/or a transmission time of reference signals. The cooperating BSs may receive the reference signal information from the BS1 and, based on the received information, may identify the radio resources reserved for transmission of reference signals and/or transmission time of reference signals.

The BS1 may transmit reference signal information (e.g., resource reservation information) to the RUE (e.g., common RUE) (S1604). The reference signal information transmitted in the step S1603 may be the same as the reference signal information transmitted in the step S1604. The RUE may receive the reference signal information from the BS1 and, based on the received information, may identify radio resources reserved for transmission of reference signals and/or transmission time of reference signals.

In the measurement/delivery step of differences between transmission timing errors, each of the BS1, BS2, BS3, and BS4 may transmit reference signals to the RUE using reserved radio resources (S1605). The reference signals may be transmitted based on a simultaneous transmission scheme or a sequential transmission scheme. The reference signal may be DMRS, CSI-RS, PRS, and/or PT-RS. The RUE may receive the reference signals in reserved radio resources, and may calculate differences between transmission timing errors based on results of measurements of the reference signals (S1606). For example, the RUE may calculate the differences between transmission timing errors of the BSs based on Equation 1 and Equation 2. The RUE may calculate the difference between transmission timing errors of the BS1 and BS2, the difference between transmission timing errors of the BS1 and BS3, and the difference between transmission timing errors of the BS1 and BS4.

The RUE may transmit information on the differences between transmission timing errors to the BS1 (S1607). The BS1 may obtain information on the differences between transmission timing errors from the RUE. The BS1 may transmit information on the differences between transmission timing errors to each of the cooperating BSs (S1608). The accuracy of absolute synchronization between BSs may be improved based on the differences between transmission timing errors. When BSs perform cooperative communication, the BSs may perform downlink transmission to the UE after compensating for differences between transmission timing errors. For example, each of the BSs may transmit a signal earlier or later by the difference between transmission timing errors in order to improve accuracy of absolute synchronization.

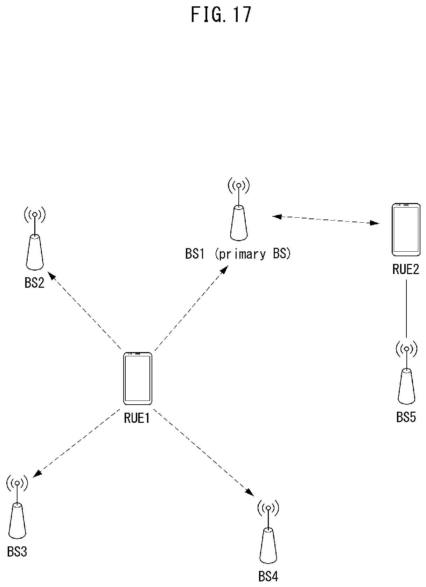

FIG. 17 is a conceptual diagram illustrating a second exemplary embodiment of a cooperation scenario between BSs.

Referring to FIG. 17, a BS1 among BSs may be a primary BS, and BS2, BS3, BS4, and BS5 may be cooperating BSs for the BS1. A common RUE for the BS1, BS2, BS3, and BS4 may be an RUE1. In other words, the RUE1 may be connected to the BS1, BS2, BS3, and BS4. A common RUE for the BS1 and BS5 may be an RUE2. In other words, the RUE2 may be connected to the BS1 and BS5. The BS1 (e.g., primary BS) may request transmission of reference signals from BSs connected to the RUE1 and/or RUE2. The BS1 may request simultaneous or sequential transmission of reference signals. The BSs may transmit reference signals. Each of the RUE1 and RUE2 may measure the reference signals received from each of the BSs, and may calculate differences between transmission timing errors of the BSs based on results of the measurements. Each of the RUE1 and RUE2 may inform the BS(s) of the differences between transmission timing errors.

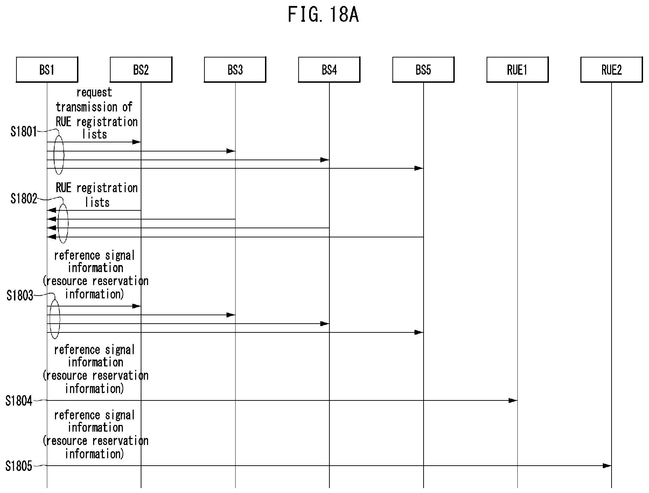

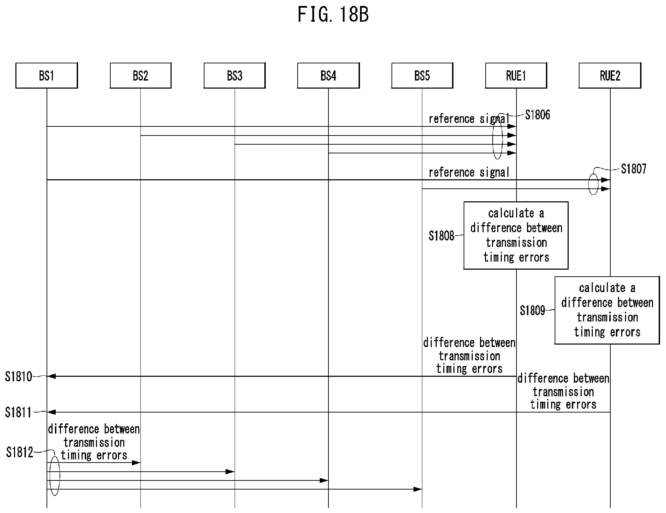

FIGS. 18A and 18B are sequence charts illustrating a second exemplary embodiment of a method for measuring and delivering differences between transmission timing errors.

Referring to FIGS. 18A and 18B, the exemplary embodiment of FIGS. 18A and 18B may be applied to the cooperation scenario shown in FIG. 17, the procedure of FIG. 17A may be performed prior to the procedure of FIG. 17B, and after completion of the procedure of FIG. 18A, the procedure of FIG. 18B may be performed. A BS1 may be a primary BS, and a BS2, BS3, BS4, and BS5 may be cooperating BSs for the BS1. An RUE1 may be a common RUE for the BS1, BS2, BS3, and BS4, and an RUE2 may be a common RUE for the BS1 and BS5. The procedures of FIGS. 18A and 18B may be respectively referred to as a configuration step (i.e., FIG. 18A) for measuring differences between transmission timing errors and a measurement/delivery step (i.e., FIG. 18B) of differences between transmission timing errors. In the configuration step for measuring differences between transmission timing errors, the BS1 (e.g., primary BS) may request transmission of RUE registrations list to cooperating BSs (e.g., BS2, BS3, BS4. BS5) (S1801). The cooperating BSs may be neighboring BSs or counterpart BSs of the BS1.

The cooperating BSs may receive the request for transmission of RUE registration lists from the BS1. In a step S1802, the BS2 may transmit an RUE registration list including information of RUE(s) registered therewith to the BS1, the BS3 may transmit an RUE registration list including information of RUE(s) registered therewith to the BS1, the BS4 may transmit an RUE registration list including information of RUE(s) registered therewith to the BS1, and the BS5 may transmit an RUE registration list including information of RUE(s) registered therewith to the BS1. The BS1 may receive RUE registration lists from the neighboring BSs. The BS1 may identify an RUE registered in common with the cooperating BS. The BS1 may identify a common RUE registered with the BSs. The BS1 may determine the RUE1 as a common RUE for the BS1, BS2, BS3, and BS4, and the BS1 may determine the RUE2 as a common RUE for the BS1 and BS5.

The BS1 may configure a first group including the BS1, BS2, BS3, BS4, and RUE1, and may configure a second group including the BS1, BS5, and RUE2. The BS1 may negotiate with cooperating BSs belonging to the first group a time at which transmission of reference signals is possible, and reserve radio resources for transmission of reference signals based on a result of the negotiation. The BS1 may negotiate with cooperating BSs belonging to the second group a time at which transmission of reference signals is possible, and reserve radio resources for transmission of reference signals based on a result of the negotiation.

The BS1 may transmit reference signal information (e.g., resource reservation information) to each of the cooperating BSs (S1803). The reference signal information may be classified into reference signal information for the first group and reference signal information for the second group. The reference signal information may include resource reservation information of reference signals for each of the cooperating BSs. The resource reservation information of reference signals may indicate radio resources reserved for transmission of reference signals and/or transmission time of reference signals. The cooperating BSs may receive the reference signal information from the BS1 and, based on the received information, may identify radio resources reserved for transmission of reference signals and/or transmission time of reference signals.

The BS1 may transmit reference signal information (e.g., resource reservation information) for the first group to the RUE1 (e.g., common RUE) (S1804). The RUE1 may receive the reference signal information from the BS1, and based on the received information, may identify the radio resources reserved for transmission of reference signals and/or transmission time of reference signals. The BS1 may transmit reference signal information (e.g., resource reservation information) for the second group to the RUE2 (e.g., common RUE) (S1805). The RUE2 may receive the reference signal information from the BS1, and based on the received information, may identify the radio resources reserved for transmission of reference signals and/or transmission time of reference signals.

In the step of measuring/delivering differences between transmission timing errors, each of the BS1, BS2, BS3, and BS4 may transmit reference signals to the RUE1 using the reserved radio resource (S1806), and each of the BS1 and BS5 may transmit reference signals to the RUE2 using the reserved radio resources (S1807). The reference signals may be transmitted based on a simultaneous transmission scheme or a sequential transmission scheme. The reference signal may be a DMRS, CSI-RS, PRS, and/or PT-RS. The RUE1 may receive reference signals in the reserved radio resources, and may calculate differences between transmission timing errors based on results of the measurements on the reference signals (S1808). The RUE1 may calculate the difference between transmission timing errors of the BS1 and BS2, the difference between transmission timing errors of the BS1 and BS3, and the difference between transmission timing errors of the BS1 and BS4. The RUE2 may receive reference signals in the reserved radio resources, and may calculate a difference between transmission timing errors based on results of the measurements on the reference signals (S1809). The RUE2 may calculate a difference between transmission timing errors of the BS1 and BS5. Each of the RUE1 and RUE2 may calculate the difference(s) between transmission timing errors of the BSs based on Equations 1 and 2.

The RUE1 may transmit information on the differences between transmission timing errors to the BS1 (S1810). The BS1 may obtain the information on the differences between transmission timing errors from the RUE1. The RUE2 may transmit information on the differences between transmission timing errors to the BS1 (S1811). The BS1 may obtain information on the differences between transmission timing errors from the RUE2. The BS1 may transmit information on the differences between transmission timing errors to each of the cooperating BSs (S1812). The differences between transmission timing errors transmitted to the BS2, BS3, and BS4 belonging to the first group may be the differences between transmission timing errors calculated in the RUE1. The differences between transmission timing errors transmitted to the BS5 belonging to the second group may be the difference between transmission timing errors calculated in the RUE2. The accuracy of absolute synchronization between the BSs may be improved based on the differences between transmission timing errors. When BSs perform cooperative communication, the BSs may perform downlink transmission to a UE after compensating for the differences between transmission timing errors. For example, each of the BSs may transmit a signal earlier or later by the difference between transmission timing errors in order to improve accuracy of absolute synchronization.

Table 1 below may show the differences between transmission timing errors measured in the RUE1. The differences between transmission timing errors in Table 1 may be differences between transmission timing errors reported by the RUE1 to the BS1. Table 1 may show differences between transmission timing errors measured based on the BS1. Other BS(s) may perform transmission after compensating for the difference between transmission timing errors based on the BS1. Alternatively, the differences between transmission timing errors based on the BS2, BS3, or BS4 may be derived from Table 1. In this case, other BS(s) may perform transmission after compensating for the difference between transmission timing errors based on the BS2, BS3, or BS4. The present disclosure includes a method for measuring/reporting the differences between transmission timing errors based on the BS1 as well as a method for measuring/reporting the differences between transmission timing errors based on other BSs (e.g., BS2, BS3, and BS4).

[Table 1]

| BS ID | Counterpart BS ID | Difference between transmission timing errors (ns) |
|---|---|---|
| BS1 | BS2 | +60 |
| BS1 | BS3 | -50 |
| BS1 | BS4 | +100 |

Table 2 below may show the differences between transmission timing errors measured in the RUE2. The differences between transmission timing errors in Table 2 may be the differences between transmission timing errors reported by the RUE2 to the BS1. Table 2 may show the differences between transmission timing errors measured based on the BS1. Other BS(s) may perform transmission after compensating for the difference between transmission timing error based on the BS1. Alternatively, the differences between transmission timing errors based on the BS5 may be derived from Table 2. In this case, other BS(s) may perform transmission after compensating for the difference between transmission timing errors based on the BS5. The present disclosure may include a method for measuring/reporting differences between transmission timing errors based on the BS1 as well as a method for measuring/reporting differences between transmission timing errors based on other BS (e.g., BS5).

[Table 2]

| BS ID | Counterpart BS ID | Difference between transmission timing errors (ns) |
|---|---|---|
| BS1 | BS5 | +30 |

In the cooperation scenario shown in FIG. 17, cooperative communication between the BSs may be performed. In this case, each of the BS2, BS3, BS4, and BS5 may perform downlink transmission after compensating for the difference between transmission timing errors. Since downlink transmission is performed based on the BS1, the BS1 may perform downlink transmission without compensating for the difference between transmission timing errors. The downlink transmission may be a transmission operation of downlink data.

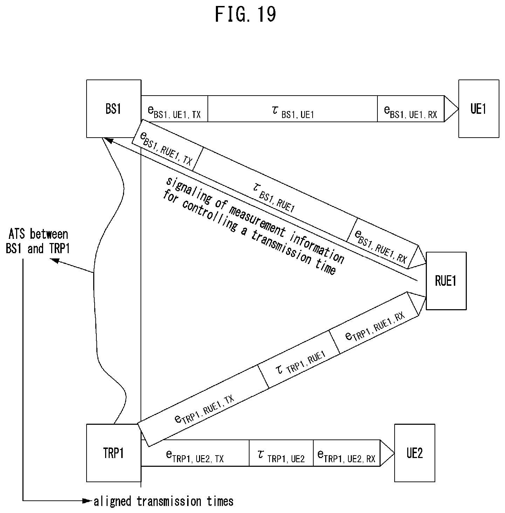

According to the above-described exemplary embodiments (e.g., the exemplary embodiments of FIGS. 3 to 18), the impact of transmission timing errors between different BSs may be eliminated. Alternatively, the impact of transmission timing errors between different BSs may be reduced. In order to achieve ATS in the wireless factory automation system, the following exemplary embodiments (e.g., exemplary embodiments of FIGS. 19 to 25) may be considered.

In the exemplary embodiments of FIGS. 3 to 18, even when a first UE (e.g., arbitrary UE) is not an RUE, if the first UE accurately know propagation delays (or distances) between the first UE and BS(s), the first UE may perform a role of an RUE.

In order to achieve ATS between UEs belonging to a single BS in the wireless factory automation system, a method of removing influences of transmission timing errors using an RUE may be used.

FIG. 19 is a conceptual diagram illustrating a sixth exemplary embodiment of transmission timing errors.

Referring to FIG. 19, a BS1 and a TRP1 may exist, the BS1 may be a single BS, the TRP1 may be a single TRP, and the TRP1 may belong to the BS1. The BS1 may be connected with a plurality of UEs. In other words, the plurality of UEs may exist within a coverage of the BS1. When the BS1 transmits a signal to a UE1, in addition to a radio propagation delay $\tau_{BS1,UE1}$, a transmission timing error $e_{BS1,UE1,TX}$ occurring at the BS1 and a reception timing error $e_{BS1,UE1,RX}$ occurring at the UE1 may exist. The reception timing error may be overcome to some extent through a sophisticated design of a physical layer numerology. Since the transmission timing error is due to a hardware impairment inherent in a communication node, the BS1 and/or UE1 cannot know the transmission timing error. In addition, the BS1 and/or UE1 cannot control the transmission timing error.

When the TRP1 belonging to the BS1 transmits a signal to a UE2, in addition to a radio propagation delay $\tau_{TRP1, UE2}$, a transmission timing error $e_{TRP1,UE2,TX}$ occurring at the TRP1 and a reception timing error $e_{TRP1,UE2,RX}$ occurring at the UE2 may exist. The reception timing error may be overcome to some extent through a sophisticated design of a physical layer numerology. Since the transmission timing error is due to a hardware impairment inherent in a communication node, the BS1, TRP1, and/or UE2 cannot know the transmission timing error. In addition, the BS1, TRP1, and/or UE2 cannot control the transmission timing error.

If an RUE1 is located between the BS1 and TRP1 (e.g. TRP1 belonging to the BS1), transmission timing errors caused by the BS1 and TRP1 cannot be identified, but a difference between the transmission timing errors of the BS1 and TRP1 may be identified using the RUE1. The BS1 and TRP1 may know the location of the RUE1. The location of the RUE1 may be a location having good radio fading channel qualities for the BS1 and the TRP1, a location where there is no change in the radio fading channel qualities, or a location where a change in the radio fading channel qualities is insignificant. The BS1 and/or RUE1 may know the propagation delay $\tau_{BS1,RUE1}$ from the BS1 to the RUE1, and the TRP1 and/or RUE1 may know the propagation delay $\tau_{TRP1,RUE1}$ from the TRP1 to the RUE1.

The reception timing errors $e_{BS1,RUE1,RX}$ and $e_{TRP1,RUE1,RX}$ for the BS1, TRP1, and RUE1 may be almost the same when the radio link quality of each of the BS1 and TRP1 is above a predefined criterion. In the present disclosure, the BS1 and TRP1 may be assumed to be connected by wire, and synchronization between the BS1 and TRP1 may be assumed to be very accurate absolute synchronization.

The BS1 and TRP1 may transmit signals for absolute synchronization simultaneously or at predefined timings (e.g., sample time points). The signals for absolute synchronization may be referred to as absolute synchronization signals. The absolute synchronization signals may be transmitted periodically or aperiodically. Based on Equation 3 below, the RUE1 may measure a difference between an arrival time $T_{BS1,RUE1}$ of the signal (e.g., absolute synchronization signal) transmitted from the BS1 and an arrival time $T_{TRP1,RUE1}$ of the signal (e.g., absolute synchronization signal) transmitted from the TRP1 based on Equation 3 below. In other words, the RUE1 may measure $T_{BS1,RUE1}$ - $T_{TRP1,RUE1}$. $T_{BS1,RUE1}$ may mean a time when the absolute synchronization signal transmitted by the BS1 arrives at the RUE1. $T_{TRP1,RUE1}$ may mean a time when the absolute synchronization signal transmitted by the TRP 1 arrives at the RUE1.

[Equation 3]

$$T_{BS1,RUE1} = e_{BS1,RUE1,TX} + \tau_{BS1,RUE1} + e_{BS1,RUE1,RX}$$

$$T_{TRP1,RUE1} = e_{TRP1,RUE1,TX} + \tau_{TRP1,RUE1} + e_{TRP1,RUE1,RX}$$

$$T_{BS1,RUE1} - T_{TRP1,RUE1} \approx \left( e_{BS1,RUE1,TX} - e_{TRP1,RUE1,TX} \right) + \left( \tau_{BS1,RUE1} - \tau_{TRP1,RUE1} \right)$$

When the difference $\tau_{BS1,RUE1}$ - $\tau_{TRP1,RUE1}$ between the propagation delays is denoted as A in Equation 3, the RUE1 may measure or estimate a difference B between transmission timing errors based on a difference between the arrival times and A. B may be defined as in Equation 4 below.

[Equation 4]

$$B = e_{BS1,RUE1,TX} - e_{TRP1,RUE1,TX} = \left( T_{BS1,RUE1} - T_{TRP1,RUE1} \right) - A$$

The RUE1 may transmit (e.g., signal) B or information related to B to the BS1 and/or TRP1. The BS1 and/or TRP1 may receive B or the information related to B from the RUE1. The BS1 and/or TRP1 may transmit B or the information related to B to a control station (e.g., controller) that manages and/or controls the BS(s). The control station may receive B or the information related to B from the BS1 and/or TRP1. The control station may adjust the transmission time(s) (e.g., sample time point(s)) of the BS1 and/or TRP1 using B or the information related to B. Alternatively, the RUE1 may transmit (e.g., signal) information on the transmission times (e.g., sample time points) of the BS1 and/or TRP1 to the BS1 and/or TRP1 without a control station.

According to the above-described operation, as shown in Equation 5 below, transmission timing errors for the UE1 and UE2 belonging to a single BS may not be eliminated, but the transmission timing errors may be adjusted to be equal.

[Equation 5]

$$e_{BS1,UE1,TX} \approx e_{BS1,RUE1,TX}$$

$$e_{TRP1,UE1,TX} \approx e_{TRP1,RUE1,TX}$$

$$e_{BS1,UE1,TX} = e_{TRP1,UE2,TX} + B$$

According to Equation 5, the TRP1 may adjust the transmission timing by adding the difference B between transmission timing errors to the existing transmission timing. According to the above-described operation, the UE1 and UE2 may achieve ATS without impact of the transmission timing errors. Accordingly, sophisticated cooperative operations may be performed.

When the control station that manages and/or controls BS1, the RUE1, or the BS1 transmits information requesting adjustment of the transmission time, the information may include the difference B between transmission timing errors in Equation 5 and/or an indication of a scheme of adjusting the transmission timing errors to be equal. The method of adjusting the transmission timing errors to be equal may be a scheme of advancing the transmission time of the BS1 by B/2 or a scheme of delaying the transmission time of the TRP1 by B/2.

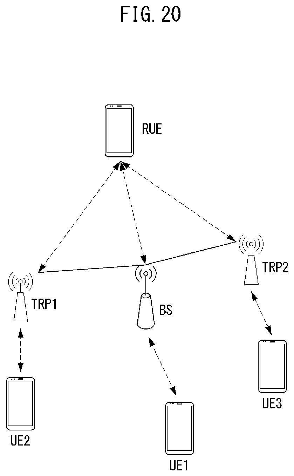

FIG. 20 is a conceptual diagram illustrating a first exemplary embodiment of a cooperation scenario of a BS and TRPs.

Referring to FIG. 20, a BS may be connected to a TRP1 and TRP2 by wires. A UE1 may be registered with the BS, a UE2 may be registered with the TRP1, and a UE3 may be registered with the TRP2. An RUE may be registered with all of the BS, TRP1, and TRP2. The BS may serve as a digital unit (DU) for the TRP1 and TRP2. For example, the BS may perform a function of digital signal processing. In addition, the BS may communicate with the UE1 through a radio access link. Absolute synchronization should be established between the UE1, UE2, and UE3 for cooperative communication. Each of the BS, TRP1, and TRP2 may obtain a difference between transmission timing errors, and may perform communication after compensating for the difference between transmission timing errors. According to the above-described operation, absolute synchronization between the UE1, UE2, and UE3 may be achieved.

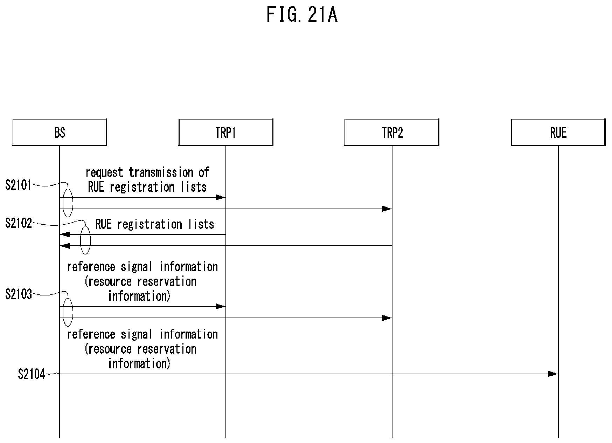

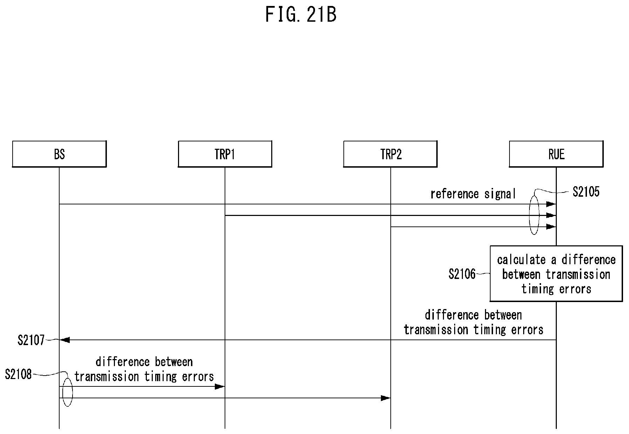

FIGS. 21A and 21B are sequence charts illustrating a third exemplary embodiment of a method for measuring and delivering differences between transmission timing errors.

Referring to FIGS. 21A and 21B, the exemplary embodiment of FIGS. 21A and 21B may be applied to the cooperation scenario shown in FIG. 20, the procedure of FIG. 21A may be performed prior to the procedure of FIG. 21B, and the procedure of FIG. 21B may be performed after completion of the procedure of FIG. 21A. The procedures of FIGS. 21A and 21B may be respectively referred to as a configuration step for measuring differences between transmission timing errors (e.g., the procedure of FIG. 21A) and a measurement/delivery step of differences between transmission timing errors (e.g., FIG. 21B). In the configuration step for measuring differences between transmission timing errors, the BS may request the TRPs (e.g., TRP1 and TRP2) to transmit RUE registration lists (S2101). The BS may request transmission of the RUE registration lists to the TRPs with which the UE(s), which are cooperative communication targets, are registered.

The TRPs may receive the request for transmission of RUE registration lists from the BS. In a step S2102, the TRP1 may transmit an RUE registration list including information of RUE(s) registered therewith to the BS, and the TRP2 may transmit an RUE registration list including information of RUE(s) registered therewith to the BS. The BS may receive the RUE registration lists from the TRPs. The BS may identify an RUE commonly registered with the TRPs and may identify an RUE commonly registered with the TRPs based on the RUE registration lists. In other words, the BS may identify a common RUE registered with the BS, TRP1, and TRP2. The BS, TRP1, and TRP2 may be connected to the common RUE.

The BS may negotiate with the TRPs a time at which transmission of references signal is possible, and may reserve radio resources for transmission of reference signals based on a result of the negotiation. The BS may transmit reference signal information (e.g., resource reservation information, transmission resource information) to each of the TRPs (S2103). The reference signal information may include resource reservation information of reference signals for each of the TRPs. The resource reservation information of reference signals may indicate radio resources reserved for transmission of reference signals and/or a transmission time of reference signals. The TRPs may receive the reference signal information from the BS, and may identify radio resources reserved for transmission of reference signals and/or the transmission time of reference signals based on the received information.

The BS may transmit reference signal information (e.g., resource reservation information) to the RUE (e.g., common RUE) (S2104). The reference signal information transmitted in the step S2103 may be the same as the reference signal information transmitted in the step S2104. The RUE may receive the reference signal information from the BS, and based on the received information, may identify radio resources reserved for transmission of reference signals and/or the transmission time of reference signals.

In the step of measuring/delivering differences between transmission timing errors, each of the BS, TRP1, and TRP2 may transmit reference signals to the RUE using reserved radio resources (S2105). The reference signals may be transmitted based on a simultaneous transmission scheme or a sequential transmission scheme. The reference signal may be DMRS, CSI-RS, PRS, and/or PT-RS. The RUE may receive the reference signals in the reserved radio resources, and may calculate differences between transmission timing errors based on results of the measurements on the reference signals (S2106). For example, the RUE may calculate differences between transmission timing errors of communication nodes based on Equations 3 and 4 (or Equations 1 and 2). The RUE may calculate a difference between transmission timing errors of the BS and TRP1 and a difference between transmission timing errors of the BS and TRP2.

The RUE may transmit information on the differences between transmission timing errors to the BS (S2107). The BS may obtain the information of the differences between transmission timing errors from the RUE. The BS may transmit information on the difference between transmission timing errors to each of the TRPs (S2108). Accuracy of absolute synchronization between the communication nodes (e.g., BS, TRP) may be improved based on the differences between transmission timing errors. When the BS and the TRPs perform cooperative communication, each of the BS and the TRPs may perform downlink transmission to the UE after compensating for the difference between transmission timing errors. For example, each of the communication nodes may transmit a signal earlier or later by the difference between transmission timing errors in order to improve accuracy of absolute synchronization.

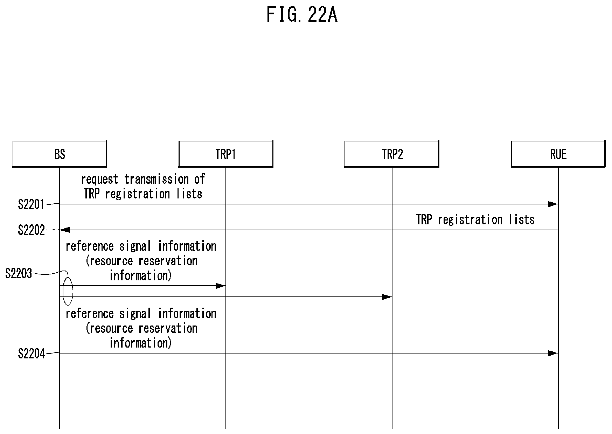

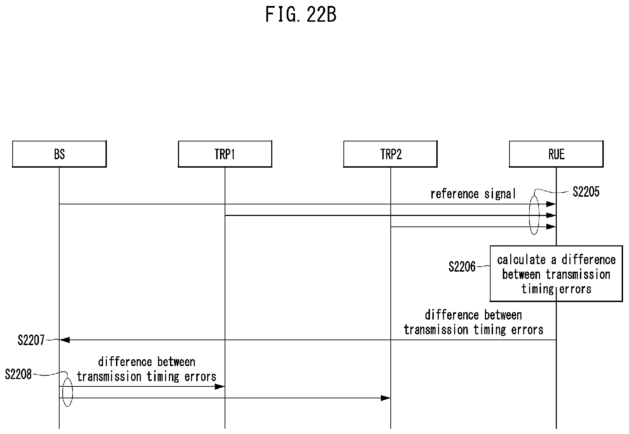

FIGS. 22A and 22B are sequence charts illustrating a fourth exemplary embodiment of a method for measuring and delivering differences between transmission timing errors.

Referring to FIGS. 22A and 22B, the exemplary embodiment of FIGS. 22A and 22B may be applied to the cooperation scenario shown in FIG. 20, the procedure of FIG. 22A may be performed prior to the procedure of FIG. 22B, and the procedure of FIG. 22B may be performed after completion of the procedure of FIG. 22A. The procedures of FIGS. 22A and 22B may be respectively referred to as a configuration step for measuring differences between transmission timing errors (e.g., the procedure of FIG. 22A) and a measurement/delivery step of differences between transmission timing errors (e.g., FIG. 22B). In the configuration step for measuring differences between transmission timing errors, the BS may request transmission of a TRP registration list from an RUE (S2201). The BS may request information of TRP(s) with which the RUE is registered.

The RUE may receive the request for transmission of a TRP registration list from the BS. The RUE may transmit a TRP registration list including information of TRP(s) with which the RUE is registered to the BS (S2202). The BS may receive the TRP registration list from the RUE. The BS may select TRP(s) to which UE(s), which are cooperative communication targets, are connected among TRPs indicated by the TRP registration list. For example, the BS may select a TRP1 and TRP2. The UE(s) that are the target(s) of cooperative communication may belong to the TRP1 and TRP2.

The BS may negotiate with the TRPs a time at which transmission of reference signals is possible, and may reserve radio resources for transmission of reference signals based on a result of the negotiation. The BS may transmit reference signal information (e.g., resource reservation information, transmission resource information) to each of the TRPs (S2203). The reference signal information may include resource reservation information of reference signals for each of the TRPs. The resource reservation information of reference signals may indicate radio resources reserved for transmission of reference signals and/or a transmission time of reference signals. The TRPs may receive the reference signal information from the BS, and may identify radio resources reserved for transmission of reference signals and/or the transmission time of reference signals based on the received information.

The BS may transmit reference signal information (e.g., resource reservation information) to the RUE (e.g., common RUE) (S2204). The reference signal information transmitted in the step S2203 may be the same as the reference signal information transmitted in the step S2204. The RUE may receive the reference signal information from the BS, and based on the received information, may identify radio resources reserved for transmission of reference signals and/or the transmission time of reference signals.

In the measurement/delivery step of differences between transmission timing errors, each of the BS, TRP1, and TRP2 may transmit reference signals to the RUE using reserved radio resources (S2205). The reference signals may be transmitted based on a simultaneous transmission scheme or a sequential transmission scheme. The reference signal may be a DMRS, CSI-RS, PRS, and/or PT-RS. The RUE may receive reference signals in reserved radio resources, and calculate differences between transmission timing errors based on results of measurements on the reference signals (S2206). For example, the RUE may calculate differences between transmission timing errors of communication nodes based on Equations 3 and 4 (or Equations 1 and 2). The RUE may calculate a difference between transmission timing errors between the BS and TRP1 and a difference between transmission timing errors between the BS and TRP2.

The RUE may transmit information on the differences between transmission timing errors to the BS (S2207). The BS may obtain the information on the differences between transmission timing errors from the RUE. The BS may transmit information on the differences between transmission timing errors to each of the TRPs (S2208). Accuracy of absolute synchronization between the communication nodes (e.g., BS, TRP) may be improved based on the difference between transmission timing errors. When the BS and the TRP perform cooperative communication, each of the BS and the TRP may perform downlink transmission to the UE after compensating for the difference between transmission timing errors.

For example, each of the communication nodes may transmit a signal earlier or later by the difference between transmission timing errors in order to improve accuracy of absolute synchronization.

Table 3 below may show differences between transmission timing errors measured in the RUE. The differences between transmission timing errors in Table 3 may be the differences between transmission timing errors reported by the RUE to the BS. The BS may share the differences between transmission timing errors with the TRP1 and TRP2. When the BS, TRP1, and TRP2 perform cooperative communication, each of the TRP1 and TRP2 may perform downlink transmission after compensating for the difference between transmission timing errors in Table 3. Since downlink transmission is performed based on the BS, the BS may perform downlink transmission without compensating for a difference between transmission timing errors. The downlink transmission may be a transmission operation of downlink data.

[Table 3]

| BS ID | Counterpart TRP ID | Difference between transmission timing errors (ns) |
|---|---|---|
| BS1 | TRP1 | +60 |
| BS1 | TRP2 | -50 |

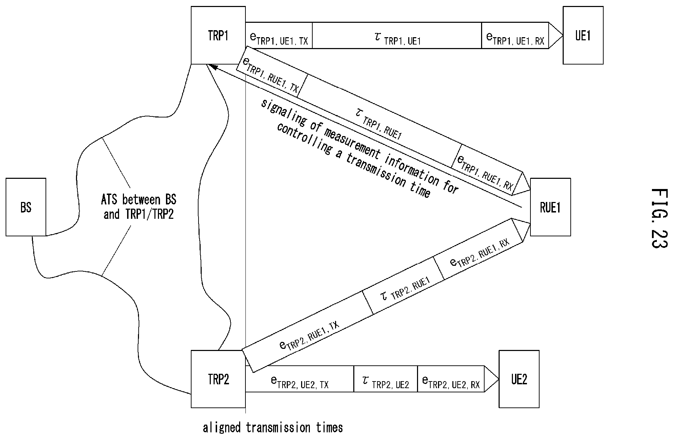

FIG. 23 is a sequence chart illustrating a seventh exemplary embodiment of a method for avoiding transmission timing errors.

Referring to FIG. 23, a single BS may exist, and a plurality of TRPs (e.g., TRP1 and TRP2) may belong to the BS. The BS may be connected with a plurality of UEs. Each of the TRP1 and TRP2 may be connected to a plurality of UEs. In other words, a plurality of UEs may exist within a coverage of each the TRP1 and TRP2. When the TRP1 transmits a signal to a UE1, in addition to a radio propagation delay $\tau_{TRP1,UE1}$, a transmission timing error $e_{TRP1,UE1,TX}$ occurring at the TRP1 and a reception timing error $e_{TRP1,UE1,RX}$ at the UE1 may exist. The reception timing error may be overcome to some extent through a sophisticated design of a physical layer numerology. Since the transmission timing error is due to a hardware impairment inherent in a communication node, the TRP1 and/or UE1 cannot know the transmission timing error. In addition, the TRP1 and/or UE1 cannot control the transmission timing error.

When the TRP2 transmits a signal to a UE2, in addition to a radio propagation delay $\tau_{TRP2,UE2}$, a transmission timing error $e_{TRP2,UE2,TX}$ occurring at the TRP2 and a reception timing error $e_{TRP2,UE2,RX}$ occurring at the UE2 may exist. The reception timing error may be overcome to some extent through a sophisticated design of a physical layer numerology. Since the transmission timing error is due to a hardware impairment inherent in a communication node, the TRP2 and/or UE2 cannot know the transmission timing error. In addition, the BS1, TRP2 and/or UE2 cannot control the transmission timing error.

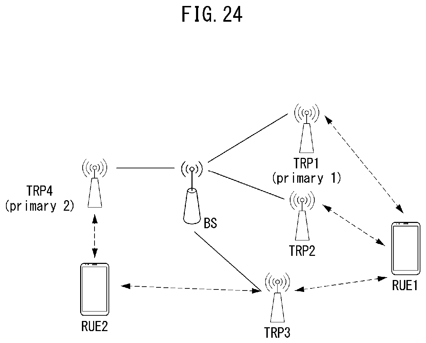

FIG. 24 is a conceptual diagram illustrating a first exemplary embodiment of a cooperation scenario of TRPs.

Referring to FIG. 24, a plurality of TRPs (e.g., TRP1, TRP2, TRP3, and TRP4) may be connected to one BS by wires. The TRP1, TRP2, and TRP3 may be connected to a common RUE, RUE1. The TRP3 and TRP4 may be connected to a common RUE, RUE2. In the cooperation scenario of FIG. 24, a method for measuring/reporting differences between transmission timing errors of TRPs may be required for cooperative communication. Each of the TRPs may be connected to the BS by wire. Each of the TRPs may receive reference signal information for measuring differences between transmission timing errors from the BS. In other words, the BS may request each of the TRP to transmit reference signals.

The BS may obtain differences between transmission timing errors for the TRP1, TRP2, TRP3, and TRP4 to perform cooperative communication among the TRPs connected to the BS. The BS may deliver the differences between transmission timing errors to the TRP1, TRP2, TRP3, and TRP4. Each of the TRP1, TRP2, TRP3, and TRP4 may perform transmission after compensating for the differences between transmission timing errors. The TRP1, TRP2, and TRP3 may be connected to the RUE1, and the TRP3 and TRP4 may be connected to the RUE2.

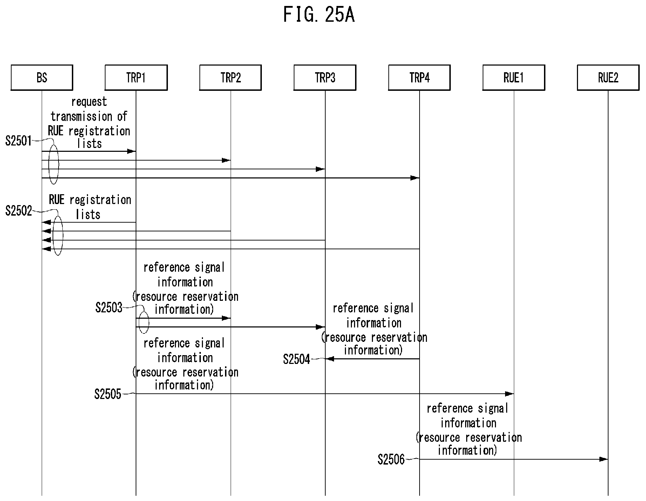

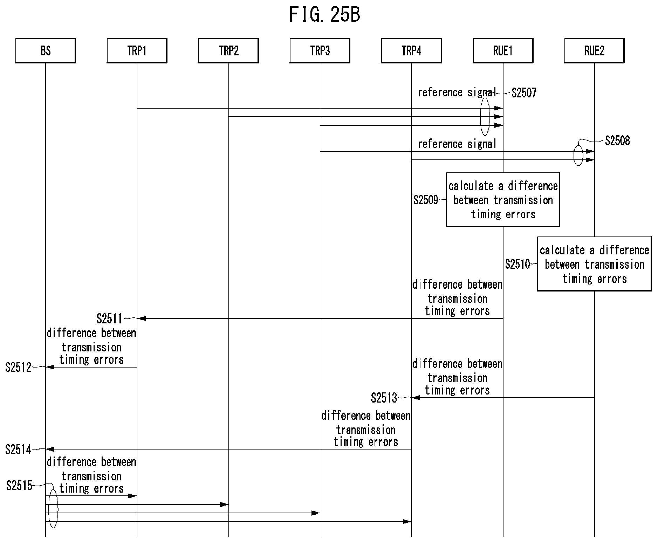

FIGS. 25A and 25B are sequence charts illustrating a fifth exemplary embodiment of a method for measuring and delivering differences between transmission timing errors.

Referring to FIGS. 25A and 25B, the exemplary embodiment of FIGS. 25A and 25B may be applied to the cooperation scenario shown in FIG. 24, the procedure of FIG. 25A may be performed prior to the procedure of FIG. 25B, and the procedure of FIG. 25B may be performed after completion of the procedure of FIG. 25A. The BS may be connected to the TRP1, TRP2, TRP3, and TRP4. The procedures of FIGS. 25A and 25B may be respectively referred to as a configuration step for measuring differences between transmission timing errors (e.g., procedure of FIG. 25A) and a measurement/delivery step of differences between transmission timing errors (e.g., procedure of FIG. 25B). In the configuration step for measuring differences between transmission timing errors, the BS may request the TRPs (e.g., TRP1, TRP2, TRP3, and TRP4), which are to perform cooperative communication, to transmit RUE registrations lists (S2501).

The TRPs may receive the request for transmission of RUE registration lists from the BS. In a step S2502, the TRP1 may transmit an RUE registration list including information of RUE(s) registered therewith to the BS, the TRP2 may transmit an RUE registration list including information of RUE(s) registered therewith to the BS, the TRP3 may transmit an RUE registration list including information of RUE(s) registered therewith to the BS, and the TRP4 may transmit an RUE registration list including information of RUE(s) registered therewith to the BS. The BS may receive RUE registration lists from the TRPs. The BS may identify an RUE commonly registered with the TRPs based on the RUE registration lists. The BS may determine an RUE1 as a common RUE for the TRP1, TRP2, and TRP3. The BS may determine an RUE2 as a common RUE for the TRP3 and TRP4.

The BS may configure a first group including the TRP1, TRP2, TRP3, and RUE1. The BS may designate the TRP1 as a primary TRP of the first group. The BS may configure a second group including the TRP3, TRP4, and RUE2. The BS may designate the TRP4 as a primary TRP of the second group. The primary TRP may perform a radio resource reservation function, a function for receiving information on differences between transmission timing errors, and/or a function of delivering information on differences between transmission timing errors. The TRP1 (e.g., primary TRP) may negotiate with cooperative TRPs belonging to the first group a time at which transmission of reference signals is possible, and reserve radio resources for transmission of reference signals based on a result of the negotiation. The TRP4 (e.g., primary TRP) may negotiate with cooperative TRPs belonging to the second group a time at which transmission of reference signals is possible, and reserve radio resources for transmission of reference signals based on a result of the negotiation.

The TRP1 may transmit reference signal information (e.g., resource reservation information) to each of the TRP2 and TRP3 belonging to the first group (S2503). The TRP4 may transmit reference signal information (e.g., resource reservation information, transmission resource information) to the TRP3 belonging to the second group (S2504). The reference signal information may include resource reservation information of reference signals for each of the TRPs. The resource reservation information of reference signals may indicate radio resources reserved for transmission of reference signals and/or the transmission time of reference signals. Each of the TRP2 and TRP3 may receive reference signal information for the first group from the TRP1, and based on the received information, may determine radio resources reserved for transmission of reference signals and/or transmission time of reference signals. The TRP3 may receive the reference signal information for the second group from the TRP4, and based on the received information, may identify radio resources reserved for transmission of reference signals and/or transmission time of reference signals.

The TRP1 may transmit reference signal information (e.g., resource reservation information, transmission resource information) for the first group to the RUE1 (e.g., common RUE) (S2505). The RUE1 may receive the reference signal information from the TRP1, and based on the received information, may identify radio resources reserved for transmission of reference signals and/or transmission time of reference signals. The TRP4 may transmit reference signal information (e.g., resource reservation information, transmission resource information) for the second group to the RUE2 (e.g., common RUE) (S2506). The RUE2 may receive the reference signal information from the TRP4, and based on the received information, may identify radio resources reserved for transmission of reference signals and/or transmission time of reference signals.

In the measurement/delivery step of differences between transmission timing errors, each of the TRP1, TRP2, and TRP3 may transmit reference signals to the RUE1 using reserved radio resources (S2507), and each of the TRP3 and TRP4 may transmit reference signals to the RUE2 using reserved radio resources (S2508). The reference signals may be transmitted based on a simultaneous transmission scheme or a sequential transmission scheme. The reference signal may be a DMRS, CSI-RS, PRS, and/or PT-RS. The RUE1 may receive the reference signals in the reserved radio resources, and may calculate differences between transmission timing errors based on results of measurements on the reference signals (S2509). The RUE1 may calculate the difference between transmission timing errors of the TRP1 and TRP2 and the difference between transmission timing errors of the TRP1 and TRP3. The RUE2 may receive the reference signals in the reserved radio resources, and may calculate differences between transmission timing errors based on results of measurements on the reference signals (S2510). The RUE2 may calculate the difference between transmission timing errors of the TRP4 and TRP3. Each of the RUE1 and RUE2 may calculate the difference between transmission timing errors of the BSs based on Equations 1 and 2.

The RUE1 may transmit information on the difference between transmission timing errors to the TRP1 (e.g., primary TRP) (S2511). The TRP1 may obtain information on the difference between transmission timing errors from the RUE1. The TPR1 may transmit information on the difference between transmission timing errors to the BS (S2512). The BS may obtain information on the difference between transmission timing errors from the TRP1. The RUE2 may transmit information on the difference between transmission timing errors to the TRP4 (e.g., primary TRP) (S2513). The TRP4 may obtain information on the difference between transmission timing errors from the RUE2. The TPR4 may transmit information on the difference between transmission timing errors to the BS (S2514). The BS may obtain the information on the difference between transmission timing errors from the TRP4.

The BS may generate differences between transmission timing errors for all TRPs (e.g., TRP1, TRP2, TRP3, and TRP4) performing cooperative communication based on the difference in transmission timing error of TRP1 and transmission timing error of TRP4. In other words, the BS may compensate for the difference in transmission timing error of TRP4 based on TRP1, and may generate differences between transmission timing errors for all TRPs (e.g., TRP1, TRP2, TRP3, and TRP4) performing cooperative communication in consideration of the compensated difference between transmission timing errors. The BS may transmit the difference in transmission timing error to each of the TRPs (S2515). Each of the TRPs may obtain the difference in transmission timing error from the BS. The accuracy of absolute synchronization between the TPRs may be improved based on the differences between transmission timing errors. In cooperative communication, each of the TRPs may perform downlink transmission after compensating for the differences between transmission timing errors based on the TRP1. For example, each of the TRPs may transmit a signal earlier or later by the difference between transmission timing errors in order to improve accuracy of absolute synchronization.

Table 4 below may show differences between transmission timing errors measured in the RUE1. The differences between transmission timing errors in Table 4 may be the differences between transmission timing errors reported by the RUE1 to the TRP1. Table 4 may represent differences between transmission timing errors measured based on the TRP1.

[Table 4]

| TRP ID | Counterpart TRP ID | Difference between transmission timing errors (ns) |
|--------|--------------------|----------------------------------------------------|
| TRP1   | TRP2               | -20                                                |
| TRP1   | TRP3               | +50                                                |

Table 5 below may show differences between transmission timing errors measured in the RUE2. The differences between transmission timing errors in Table 5 may be the differences between transmission timing errors reported by the RUE2 to the TRP4. Table 5 may show differences between transmission timing errors measured based on the TRP4.

[Table 5]

| TRP ID | Counterpart TRP ID | Difference between transmission timing errors (ns) |
|--------|--------------------|----------------------------------------------------|
| TRP4   | TRP3               | +30                                                |

The BS may compensate for the differences between transmission timing errors of Table 5 based on the TRP1, and may generate differences between transmission timing errors for all TRPs (e.g., TRP1, TRP2, TRP3, TRP4) performing cooperative communication in consideration of the compensated difference between transmission timing errors. Table 6 may show differences between transmission timing errors for all TRPs performing cooperative communication. The BS may derive the difference between transmission timing errors of the TRP1 and TRP4 based on the difference between transmission timing error measured at the RUE1 and the difference between transmission timing errors measured at the RUE2. The TRP1 may not be directly connected to the TRP4.

[Table 6]

| TRP ID | Counterpart TRP ID | Difference between transmission timing errors (ns) |
|--------|--------------------|----------------------------------------------------|
| TRP1   | TRP2               | -20                                                |
| TRP1   | TRP3               | +50                                                |
| TRP1   | TRP4               | +20                                                |

In the above-described exemplary embodiments (e.g., the exemplary embodiments of FIGS. 19 to 25), even when a first UE (e.g., arbitrary UE) is not an RUE, if the first UE accurately knows propagation delay(s) (or distance(s)) between the first UE and BS(s), the first UE may perform a role of an RUE.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter. The hardware device described above may be configured to operate with at least one software module to perform the operations of the present disclosure, and vice versa.

Although the present disclosure has been described with reference to the above embodiments, it will be understood by those skilled in the art that various modifications and changes may be made to the present disclosure without departing from the spirit and scope of the present disclosure as set forth in the claims below.

**Claims**

1.   A method of a reference user equipment (RUE), comprising:

   receiving a first error measurement request message from a first base station;
   receiving a second error measurement request message from a second base station;
   receiving a first reference signal from the first base station based on the first error measurement request message;
   determining a first transmission timing of the first base station based on the first reference signal;
   receiving a second reference signal from the second base station based on the second error measurement request message;
   determining a second transmission timing of the second base station based on the second reference signal;
   calculating a difference between the first transmission timing and the second transmission timing;
   transmitting a first error measurement response message including information on the difference to the first base station; and
   transmitting a second error measurement response message including information on the difference to the second base station.

2.   The method according to claim 1, wherein the first error measurement request message includes information on transmission resources for the first reference signal, the second error measurement request message includes information on transmission resources for the second reference signal, and each of the first reference signal and the second reference signal is one of a demodulation reference signal (DMRS), a channel state information-reference signal (CSI-RS), a positioning reference signal (PRS), or a phase tracking-reference signal (PT-RS).

3.   The method according to claim 1, wherein each of the first error measurement request message and the second error measurement request message includes a type field and a counterpart base station (BS) field, the type field indicates that a type of an error measurement message is an error measurement request, the counterpart BS field included in the first error measurement request message is set to an identifier (ID) of the second base station, which is a counterpart BS for which error measurement is desired, and the counterpart BS field included in the second error measurement request message is set to an ID of the first base station, which is a counterpart BS for which error measurement is desired.

4.   The method according to claim 1, wherein each of the first error measurement response message and the second error measurement response message includes a type field, a counterpart BS field, a timing difference field, and a compensation BS field, the type field indicates that a type of an error measurement message is an error measurement response, the counterpart BS field included in the first error measurement response message is set to an ID of the second base station, which is a counterpart BS for which error measurement is desired, the counterpart BS field included in the second error measurement response message is set to an ID of the first base station, which is a counterpart BS for which error measurement is desired, the timing difference field is set to the difference between the first transmission timing and the second transmission timing, and the compensation BS field indicates a BS that compensates for the difference between the transmission timings.

5.   The method according to claim 1, wherein the first transmission timing is determined by further considering a first propagation delay for the first base station and the RUE, and the second transmission timing is determined by further considering a second propagation delay for the second base station and the RUE.

6.   The method according to claim 1, wherein the RUE is a common RUE between one or more RUEs registered with the first base station and one or more RUEs registered with the second base station.

7.   A method of a first base station, comprising:

   transmitting a first error measurement request message to a reference user equipment (RUE);
   transmitting a first reference signal to the RUE based on the first error measurement request message;

transmitting an error measurement demand message to a second base station;
receiving, from the RUE, a first error measurement response message including information on a difference between a first transmission timing of the first base station and a second transmission timing of the second base station; and
compensating for the difference to perform downlink communication.

8. The method according to claim 7, further comprising:

requesting transmission of a base station (BS) registration list to one or more RUEs;
receiving one or more BS registration lists from the one or more RUEs; and
identifying a common RUE registered in common with the first base station and the second base station based on the one or more BS registration lists.

9. The method according to claim 7, further comprising:

requesting transmission of an RUE registration list to one or more base stations;
receiving one or more RUE registration lists from the one or more base stations; and
identifying the second base station to which the RUE is registered among the one or more base stations based on the one or more RUE registration lists,
wherein the RUE is a common RUE registered in common with the first base station and the second base station, and the error measurement request message is transmitted to the second base station having the common RUE.

10. The method according to claim 7, further comprising: transmitting information on the difference between the first transmission timing of the first base station and the second transmission timing of the second base station to the second base station.

11. The method according to claim 7, wherein the first error measurement request message includes a type field and a counterpart BS field, the type field indicates that a type of an error measurement message is an error measurement request, and the counterpart BS field included in the first error measurement request message is set to an identifier (ID) of the second base station, which is a counterpart BS for which error measurement is desired.

12. The method according to claim 7, wherein the error measurement demand message requests the second base station to transmit a second error measurement request message or a second reference signal to the RUE.

13. The method according to claim 7, wherein the first error measurement response message includes a type field, a counterpart BS field, a timing difference field, and a compensation BS field, the type field indicates that a type of an error measurement message is an error measurement response, and the counterpart BS field included in the first error measurement response message is set to an ID of the second base station, which is a counterpart BS for which error measurement is desired, the timing difference field is set to the difference between the first transmission timing and the second transmission timing, and the compensation BS field indicates a BS that compensates for the difference between the transmission timings.

14. The method according to claim 7, wherein the first transmission timing is determined by further considering a first propagation delay for the first base station and the RUE, and the second transmission timing is determined by further considering a second propagation delay for the second base station and the RUE.

15. A method of a first base station, comprising:

transmitting an error measurement demand message requesting transmission of a second reference signal to a second base station;
transmitting an error measurement request message to a reference user equipment (RUE);
transmitting a first reference signal to the RUE based on the error measurement request message;
receiving, from the RUE, an error measurement response message including information on a difference between a first transmission timing of the first base station and a second transmission timing of the second base station; and
compensating for the difference to perform downlink communication.

16. The method according to claim 15, wherein the error measurement demand message requests simultaneous transmission or sequential transmission of the first reference signal and the second reference signal, the error measurement demand message includes transmission resource information of the second reference signal, and the second reference signal of the second base station is transmitted to the RUE in transmission resources indicated by the transmission resource information.

17. The method according to claim 15, wherein the error measurement request message includes transmission resource information of the first reference signal and transmission resource information of the second reference signal.

18. The method according to claim 15, wherein the first transmission timing is determined by further considering a first propagation delay for the first base station and the RUE, and the second transmission timing is determined by further considering a second propagation delay for the second base station and the RUE.

19. The method according to claim 15, further comprising:

    requesting transmission of a base station (BS) registration list to one or more RUEs;
    receiving one or more BS registration lists from the one or more RUEs; and
    identifying a common RUE registered in common with the first base station and the second base station based on the one or more BS registration lists,
    wherein the RUE to which the error measurement request message is transmitted is the common RUE.

20. The method according to claim 15, further comprising:

    requesting transmission of an RUE registration list to one or more base stations;
    receiving one or more RUE registration lists from the one or more base stations; and
    identifying the second base station to which the RUE is registered among the one or more base stations based on the one or more RUE registration lists,
    wherein the RUE is a common RUE registered in common with the first base station and the second base station, and the error measurement demand message is transmitted to the second base station having the common RUE.

# FIG. 1

BS1 — $e_{BS1,UE1,TX}$ | $\tau_{BS1,UE1}$ | $e_{BS1,UE1,RX}$ → UE1

$e_{BS1,UE1,TX}$ : transmission timing error from BS1 to UE1
$e_{BS2,UE2,TX}$ : transmission timing error from BS2 to UE2
$\tau_{BS1,UE1}$ : propagation delay from BS1 to UE1
$\tau_{BS2,UE2}$ : propagation delay from BS2 to UE2
$e_{BS1,UE1,RX}$ : reception timing error from BS1 to UE1
$e_{BS2,UE2,RX}$ : reception timing error from BS2 to UE2

ATS between BS1 and BS2

$e_{BS1,UE1,TX} \neq e_{BS2,UE2,TX}$
$e_{BS1,UE1,RX} \neq e_{BS2,UE2,RX}$

BS2 — $e_{BS2,UE2,TX}$ | $\tau_{BS2,UE2}$ | $e_{BS2,UE2,RX}$ → UE2

aligned transmission times

FIG. 2

200

220

memory

ROM | RAM

210

processor

input
interface
device ~240

output
interface
device ~250

270

storage
device ~260

transceiver ~230

## FIG. 3

e_{BS1,UE1,TX} :transmission timing error from BS1 to UE1  e_{BS1,UE1,RX} :reception timing error from BS1 to UE1
e_{BS2,UE2,TX} :transmission timing error from BS2 to UE2  e_{BS2,UE2,RX} :reception timing error from BS2 to UE2
$\tau_{BS1,UE1}$ :propagation delay from BS1 to UE1  e_{BS1,RUE,TX} :transmission timing error from BS1 to RUE
$\tau_{BS2,UE2}$ :propagation delay from BS2 to UE2  e_{BS2,RUE,TX} :transmission timing error from BS2 to RUE
$\tau_{BS1,RUE}$ :propagation delay from BS1 to RUE  e_{BS1,RUE,RX} :reception timing error from BS1 to RUE
$\tau_{BS2,RUE}$ :propagation delay from BS2 to RUE  e_{BS2,RUE,RX} :reception timing error from BS2 to RUE

$e_{BS1,UE1,TX} \approx e_{BS1,RUE,TX}$
$e_{BS2,UE2,TX} \approx e_{BS2,RUE,TX}$
$e_{BS1,RUE,RX} \approx e_{BS2,RUE,RX}$
$e_{BS1,UE1,TX} \neq e_{BS2,UE2,TX}$
$e_{BS1,UE1,RX} \neq e_{BS2,UE2,RX}$

$e_{BS1,RUE,TX} \neq e_{BS2,RUE,TX}$
(avoidable)

FIG. 4

```
  ┌─────┐              ┌─────┐              ┌─────┐
  │ BS1 │              │ BS2 │              │ RUE │
  └──┬──┘              └──┬──┘              └──┬──┘
     │                   │                    │
     │   error measurement                    │
     │   request message                      │
S401─┤───────────────────┼───────────────────▶│
     │                   │                    │
     │                   │  error measurement │
     │                   │  request message   │
     │              S402─┤───────────────────▶│
     │   reference signal                     │
S403─┤───────────────────┼───────────────────▶│
     │                   │  reference signal  │
     │              S404─┤───────────────────▶│
     │                   │         ┌──────────┴──────────┐
     │                   │         │ calculate a difference│
     │                   │    S405─┤ between transmission  │
     │                   │         │    timing errors      │
     │   error measurement         └──────────┬──────────┘
     │   response message                     │
S406─◀───────────────────┼────────────────────┤
     │                   │  error measurement │
     │                   │  response message  │
     │              S407─◀────────────────────┤
     │                   │                    │
```

FIG. 5

| error measurement message type (request) |
| error measurement counterpart BS ID (PCI) |

FIG. 6

| error measurement message type (response) |
| error measurement counterpart BS ID (PCI) |
| difference between transmission timing errors |
| error compensation BS selection |

FIG. 7

| error measurement message type (request) |
| error measurement counterpart BS ID #1 (PCI) |
| error measurement counterpart BS ID #2 (PCI) |
| error measurement counterpart BS ID #3 (PCI) |

.
.
.

| message response demand time (optional) |

FIG. 8

| |
|---|
| error measurement message type (response) |
| error measurement counterpart BS ID #1 (PCI) |
| difference between transmission timing errors |
| error compensation BS selection |
| error measurement counterpart BS ID #2 (PCI) |
| difference between transmission timing errors |
| error compensation BS selection |

.
.
.

FIG. 9

```
  BS1                    BS2                  RUE

          error measurement
          request message
S901 ┬────────────────────────────────────────►
          reference signal
S902 ┬────────────────────────────────────────►
     │                    │  request of transmission of an
     │                    │  error measurement request
     │                    │  message or reference signal
     │              S903 ◄┼──────────────────────
     │                    │    error measurement
     │                    │    request message
     │              S904 ─┼ ─ ─ ─ ─ ─ ─ ─ ─ ─ ─►
     │                    │    reference signal
     │              S905 ─┼──────────────────────►
     │                    │                 ┌──────────────────┐
     │                    │                 │ calculate a difference
     │                    │          S906 ──┤ between transmission
     │                    │                 │    timing errors   │
     │                    │                 └──────────────────┘
     │   error measurement
     │   response message
S907 ◄┼─────────────────────────────────────────
     │                    │    error measurement
     │                    │    response message
     │              S908 ◄┼ ─ ─ ─ ─ ─ ─ ─ ─ ─ ─
     │                    │                      │
```

FIG. 10

| error measurement message type (request) |
| error measurement counterpart BS ID (PCI) |
| error measurement demand for a counterpart BS (optional) |
| error compensation BS request (optional) |

FIG. 11

FIG. 12

EP 4 583 595 A1

FIG. 13

FIG. 14

FIG. 15

EP 4 583 595 A1

FIG. 16A

# FIG. 16B

| BS | BS2 | BS3 | BS4 | RUE |
|---|---|---|---|---|

reference signal — S1605

S1606 — calculate a difference between transmission timing errors

difference between transmission timing errors

S1607

difference between transmission timing errors

S1608

FIG. 17

FIG. 18A

# FIG. 18B

EP 4 583 595 A1

FIG. 19

BS1   $e_{BS1, UE1, TX}$   $\tau_{BS1, UE1}$   $e_{BS1, UE1, RX}$   UE1

$e_{BS1, RUE1, TX}$

$\tau_{BS1, RUE1}$

*signaling of measurement information for controlling a transmission time*

$e_{BS1, RUE1, RX}$

RUE1

ATS between BS1 and TRP1

$e_{TRP1, RUE1, RX}$

$\tau_{TRP1, RUE1}$

$e_{TRP1, RUE1, TX}$

TRP1   $e_{TRP1, UE2, TX}$   $\tau_{TRP1, UE2}$   $e_{TRP1, UE2, RX}$   UE2

→ aligned transmission times

FIG. 20

# FIG. 21A

| BS | TRP1 | TRP2 | RUE |

S2101 — request transmission of RUE registration lists

S2102 — RUE registration lists

S2103 — reference signal information (resource reservation information)

S2104 — reference signal information (resource reservation information)

# FIG. 21B

| BS | TRP1 | TRP2 | RUE |
|---|---|---|---|

reference signal — S2105

calculate a difference
S2106 — between transmission
timing errors

difference between
transmission timing errors

S2107

S2108 — difference between
transmission timing errors

FIG. 22A

EP 4 583 595 A1

# FIG. 22B

FIG. 23

FIG. 24

# FIG. 25A

# FIG. 25B

## INTERNATIONAL SEARCH REPORT

| International application No. |
|---|
| **PCT/KR2023/013100** |

| **A.** | **CLASSIFICATION OF SUBJECT MATTER** |
|---|---|

**H04W 56/00**(2009.01)i; **H04L 5/00**(2006.01)i; **H04L 7/00**(2006.01)i

According to International Patent Classification (IPC) or to both national classification and IPC

| **B.** | **FIELDS SEARCHED** |
|---|---|

Minimum documentation searched (classification system followed by classification symbols)

H04W 56/00(2009.01); H04B 1/715(2011.01); H04B 7/0408(2017.01); H04W 24/10(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 오차(error), 측정(measurement), 참조 신호(reference signal), 송신(transmission), 타이밍(timing), 차이(difference), 기지국(base station)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | KR 10-2021-0093789 A (ELECTRONICS AND TELECOMMUNICATIONS RESEARCH INSTITUTE) 28 July 2021 (2021-07-28) See paragraphs [0041]-[0105]; claims 1 and 19; and figures 1-6. | 1-20 |
| A | KR 10-2022-0061848 A (ELECTRONICS AND TELECOMMUNICATIONS RESEARCH INSTITUTE) 13 May 2022 (2022-05-13) See paragraphs [0035]-[0144]; and figures 1-12. | 1-20 |
| A | US 2021-0352605 A1 (QUALCOMM INCORPORATED) 11 November 2021 (2021-11-11) See paragraphs [0052]-[0179]; and figures 1-22. | 1-20 |
| A | KR 10-2021-0125573 A (HUAWEI TECHNOLOGIES CO., LTD.) 18 October 2021 (2021-10-18) See paragraphs [0085]-[0491]; and figures 1-20. | 1-20 |
| A | KR 10-2021-0024637 A (ZTE CORPORATION) 05 March 2021 (2021-03-05) See paragraphs [0017]-[0487]; and figures 1-14. | 1-20 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 December 2023** | **27 December 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/013100**

| Patent document cited in search report | | | Publication date (day/month/year) | Patent family member(s) | | | Publication date (day/month/year) |
|---|---|---|---|---|---|---|---|
| KR | 10-2021-0093789 | A | 28 July 2021 | None | | | |
| KR | 10-2022-0061848 | A | 13 May 2022 | US | 2022-0150873 | A1 | 12 May 2022 |
| US | 2021-0352605 | A1 | 11 November 2021 | BR | 112022021700 | A2 | 20 December 2022 |
| | | | | CN | 115669101 | A | 31 January 2023 |
| | | | | EP | 4147498 | A1 | 15 March 2023 |
| | | | | JP | 2023-525985 | A | 20 June 2023 |
| | | | | KR | 10-2023-0008714 | A | 16 January 2023 |
| | | | | TW | 202147897 | A | 16 December 2021 |
| | | | | US | 11576139 | B2 | 07 February 2023 |
| | | | | WO | 2021-225964 | A1 | 11 November 2021 |
| KR | 10-2021-0125573 | A | 18 October 2021 | CN | 111585732 | A | 25 August 2020 |
| | | | | CN | 111585732 | B | 25 February 2022 |
| | | | | EP | 3923501 | A1 | 15 December 2021 |
| | | | | US | 2021-0377892 | A1 | 02 December 2021 |
| | | | | WO | 2020-164514 | A1 | 20 August 2020 |
| KR | 10-2021-0024637 | A | 05 March 2021 | CN | 110662285 | A | 07 January 2020 |
| | | | | CN | 110662285 | B | 08 November 2022 |
| | | | | EP | 3817465 | A1 | 05 May 2021 |
| | | | | US | 11589324 | B2 | 21 February 2023 |
| | | | | US | 2021-0289461 | A1 | 16 September 2021 |
| | | | | WO | 2020-001264 | A1 | 02 January 2020 |

Form PCT/ISA/210 (patent family annex) (July 2022)